# EUROPEAN PATENT SPECIFICATION

(11) **EP 1 895 366 B1**
(45) Date of publication and mention of the grant of the patent: **16.10.2013**
(21) Application number: 07115176.5
(22) Date of filing: 29.08.2007
(51) Int. Cl.: G03G 15/00

(54) **Printing system with display, capable of processing a plurality of jobs and control method therefor**
Drucksystem mit Anzeigebildschirm, anwendbar in der Bearbeitung mehrfacher Aufträge und Steuerverfahren dafür
Système d'impression avec écran, capable de proceder plusieures taches et son procédé de commande

(30) Priority: 30.08.2006 JP 2006234365
(43) Date of publication of application: 05.03.2008
(73) Proprietor: Canon Kabushiki Kaisha, Ohta-Ku, Tokyo 146-8501 (JP)
(72) Inventor: Hatakeyama, Yuki, Ohta-ku Tokyo (JP)
(74) Representative: Hitching, Peter Matthew

(56) References cited:
- EP-A2- 1 130 480
- JP-A- 2002 362 821
- US-A1- 2005 017 426
- US-A1- 2005 084 277

## Description

### BACKGROUND OF THE INVENTION

### Field of the Invention

The present invention relates to a printing system adapted to be able to selectively supply sheets of a job having undergone print processing by a printing apparatus to a plurality of sheet processing apparatuses, and a control method therefor.

### Description of the Related Art

Recently, a POD (Print On Demand) printing system using an electrophotographic or inkjet printing apparatus has been proposed (see, e.g., patent reference 1: Japanese Patent Laid-Open No. 2004-310746, and patent reference 2: Japanese Patent Laid-Open No. 2004-310747).

US 2005017426 discloses a printing system having a plurality of sheet finisher units, where the ejection position of the sheets is indicated.

The POD environment requires a configuration capable of executing a check print operation to check the print contents of a print job. That is, this printing environment requires a configuration capable of executing the check print operation while the printing system continuously executes the print operation. However, this configuration may cause the following new problems.

When executing the above-mentioned check print while intermittently executing the print operation in a printing system configured by connecting a plurality of sheet processing apparatuses, the paper path of the printing system becomes long because a plurality of sheet processing apparatuses are connected. At the same time, a situation in which a plurality of jobs is processed may occur.

In this situation, the operator cannot recognize jobs currently being processed by the printer of the printing system and a plurality of sheet processing apparatuses.

The printer and sheet processing apparatuses may have windows from which the operator can check jobs in process. However, the operator can only recognize that sheets are delivered or that sheets exist. It is difficult to confirm the contents of each job.

The situation in which the operator cannot recognize currently processed jobs may lead to poor productivity in the POD environment where it is important how to efficiently process a plurality of print jobs at high productivity.

### SUMMARY OF THE INVENTION

It is desirable to provide a convenient printing system adaptable not only to the office environment but also to the POD environment, and a control method therefor.

It is also desirable to provide a mechanism of minimizing intervention work by an operator that may occur in the POD environment due to the specifications of an image forming apparatus designed in consideration of only the office environment. This can make it possible to achieve efficient work by reducing the workload of the operator.

It is also desirable to provide a mechanism capable of flexibly coping with various needs from various users as much as possible in consideration of various situations and environments of use.

It is also desirable to select a job processed by a printing system via a device configuration window which makes the configuration of the printing system correspond to information on the job in process, and perform specific processing for the job.

The present invention in its first aspect provides a printing system as specified in claim 1.
The present invention in its second aspect provides a method of controlling a printing system as specified in claim 19. The present invention in its third aspect provides a computer program as specified in claim 20.

Further features of the present invention will become apparent from the following description of exemplary embodiments with reference to the attached drawings.

### BRIEF DESCRIPTION OF THE DRAWINGS

Fig. 1 is a view for explaining an overall configuration of a printing environment 10000 including a printing system 1000 to be controlled;

Fig. 2 is a block diagram for explaining a configuration of the printing system 1000 to be controlled;

Fig. 3 is a side sectional view showing an internal configuration of the printing system 1000;

Fig. 4 is a side sectional view showing an internal structure of a large-volume stacker;

Fig. 5 is a side sectional view showing an internal structure of a glue binding apparatus;

Fig. 6 is a side sectional view showing an internal structure of a saddle stitching apparatus;

Fig. 7 is a view showing an arrangement of an operation unit 204;

Fig. 8 is a view showing an example of a window to select a sheet processing type;

Fig. 9 is a view showing an example of a window to register and set a sheet processing apparatus;

Fig. 10 is a view showing an example of a window to select a sheet processing type on the display unit of a computer;

Figs. 11A to 11E are flowcharts showing processing controlled by a control unit 205 of the printing system 1000;

Fig. 12 is a view showing an example of a basic operation window (corresponding to an initial setup window) displayed on a touch panel unit 401;

Fig. 13 is a view showing an example of a window to confirm the job status;

Fig. 14 is a view showing an example of a job designation method selection window;

Fig. 15 is a view showing an example of a device configuration window;

Fig. 16 is a view showing an example of a suspension selection window;

Fig. 17 is a view showing an example of a detailed information display selection window;

Fig. 18 is a view showing an example of a print stop selection window;

Fig. 19 is a view showing an example of a check print selection window;

Fig. 20 is a view showing a state in which the job status is rewritten into "suspended" 3001;

Fig. 21 is a view showing an example of a detailed job information window;

Fig. 22 is a view showing an example of a print stop confirmation window;

Fig. 23 is a view showing an example of a page count designation selection window to perform check print;

Fig. 24 is a view showing an example of a check print destination display window;

Fig. 25A is a chart showing the control sequence of a test copy (test print) function; and

Fig. 25B is a chart showing the control sequence of a check print function.

### DESCRIPTION OF THE EMBODIMENTS

The best mode for carrying out the present invention will be explained in detail below with reference to the accompanying drawings.

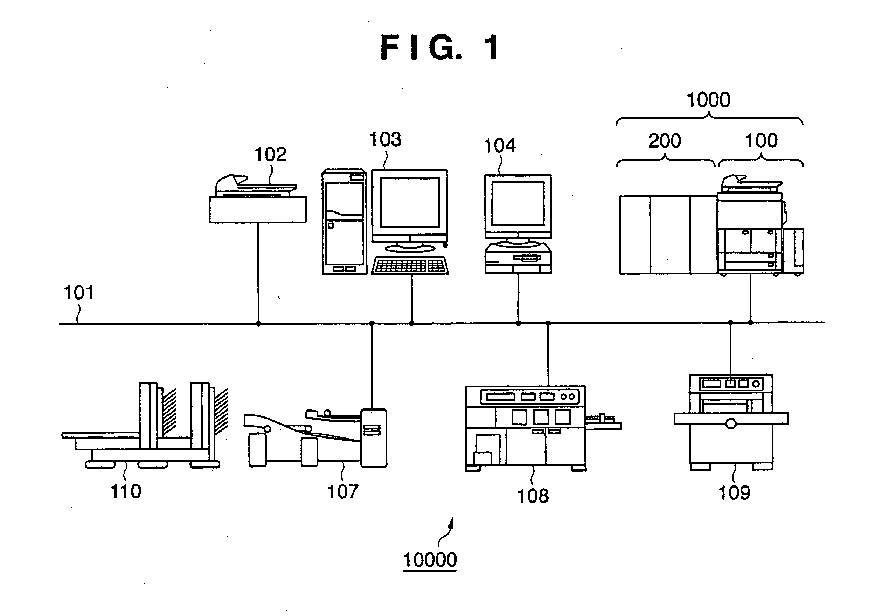

A POD system 10000 in Fig. 1 comprises a printing system 1000, scanner 102, server computer (PC) 103, and client computer (PC) 104, which are connected to each other via a network 101. Sheet processing apparatuses such as a paper folding apparatus 107, case binding apparatus 108, cutting apparatus 109, and saddle stitching apparatus 110 are also connected to the POD system 10000.

The printing system 1000 comprises a printing apparatus 100 and sheet processing apparatus 200. As an example of the printing apparatus 100, the embodiment will describe an MFP (Multi Function Peripheral) having a plurality of functions such as the copy and printer functions. However, the printing apparatus 100 may be a single function type printing apparatus having only the copy or printer function.

The server computer (PC) 103 manages data exchange with a variety of apparatuses connected to the network 101. The client computer (PC) 104 transmits image data to the printing apparatus 100 and PC 103 via the network 101. The paper folding apparatus 107 folds sheets printed by the printing apparatus 100. The case binding apparatus 108 case-binds sheets printed by the printing apparatus 100. The cutting apparatus 109 cuts a bundle of sheets printed by the printing apparatus 100. The saddle stitching apparatus 110 saddle-stitches sheets printed by the printing apparatus 100.

In the use of the paper folding apparatus 107, case binding apparatus 108, cutting apparatus 109, and saddle stitching apparatus 110, the user takes out sheets printed by the printing apparatus 100 from the printing system 1000, sets them in an apparatus for use, and causes the apparatus to process them. A plurality of apparatuses in the POD system 10000 of Fig. 1 except for the saddle stitching apparatus 110 are connected to the network 101 so as to communicate data with each other.

Sheet processing apparatuses are classified into three categories "inline finisher", "near-line finisher", and "offline finisher", and defined as follows. The "inline finisher" is defined as a sheet processing apparatus which satisfies both (condition 1) and (condition 2) listed below. The "near-line finisher" is defined as a sheet processing apparatus which satisfies only (condition 2). The "offline finisher" is defined as a sheet processing apparatus which satisfies neither (condition 1) nor (condition 2).

(Condition 1) The paper path (sheet feeding path) is physically connected to the printing apparatus 100 so as to directly receive sheets conveyed from the printing apparatus 100 without any operator intervention.

(Condition 2) A sheet processing apparatus is electrically connected to another apparatus so as to communicate data necessary for an operation instruction, status confirmation, or the like with another apparatus. More specifically, a sheet processing apparatus is electrically connected to the printing apparatus 100 so as to communicate data with it, or electrically connected to an apparatus (e.g., the PC 103 or 104) other than the printing apparatus 100 via the network 101 so as to communicate data with the apparatus. A sheet processing apparatus which satisfies either condition meets (condition 2).

That is, the sheet processing apparatus 200 corresponds to an "inline finisher". The paper folding apparatus 107, case binding apparatus 108, and cutting apparatus 109 correspond to "near-line finishers". The saddle stitching apparatus 110 corresponds to an "offline finisher".

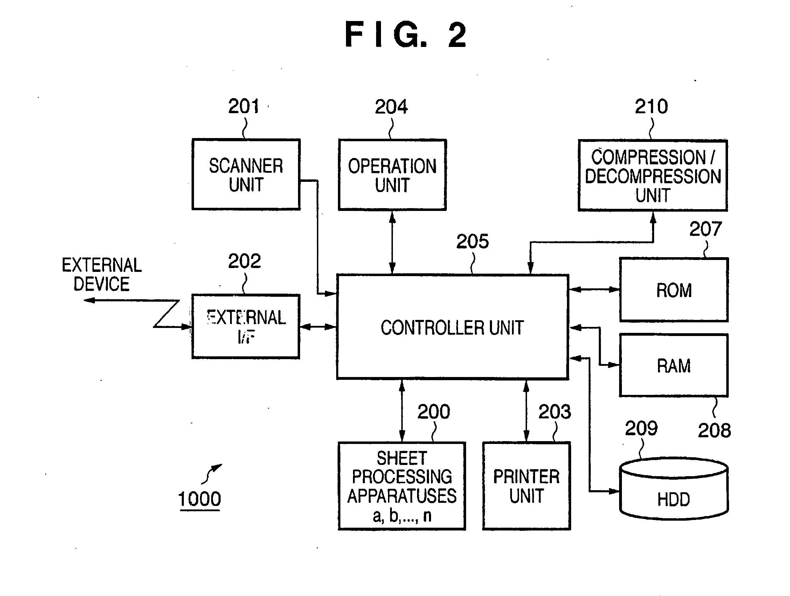

The configuration of the printing system 1000 will be explained with reference to the system block diagram of Fig. 2.

The printing apparatus 100 incorporates units shown in Fig. 2 in the printing system 1000 except for the sheet processing apparatus 200. An arbitrary number of sheet processing apparatuses 200 are connectable to the printing apparatus 100.

The printing system 1000 is configured so that the sheet processing apparatus 200 connected to the printing apparatus 100 can execute sheet processing for sheets printed by the printing apparatus 100. It is also possible to form the printing system 1000 from only the printing apparatus 100 without connecting the sheet processing apparatus 200. The sheet processing apparatus 200 can communicate with the printing apparatus 100, and execute sheet processing (to be described later) upon receiving an instruction from the printing apparatus 100.

In the printing apparatus 100, a scanner unit 201 scans an image on a document, converts the image into image data, and transfers the image data to another unit. An external I/F 202 exchanges data with other apparatuses connected to the network 101. A printer unit 203 forms an image based on input image data, and prints it on a sheet. An operation unit 204 has a hard key input unit and touch panel, from which instructions from the user are accepted. The operation unit 204 provides various displays on its touch panel.

A control (controller) unit 205 comprehensively controls the processes and operations of various units in the printing system 1000. The control unit 205 also controls the operation of the printing apparatus 100 and that of the sheet processing apparatus 200 connected to the printing apparatus 100. A ROM 207 stores various programs to be executed by the control unit 205. For example, the ROM 207 stores programs to execute various processes of flowcharts to be described later, and display control programs to display various setup images to be described later. The ROM 207 further stores a program to cause the control unit 205 to interpret PDL (Page Description Language) code data received from the PC 103, PC 104, or the like and rasterize the PDL code data into raster image data. In addition, the ROM 207 stores a boot sequence, font information, and the like.

A RAM 208 stores image data sent from the scanner unit 201 and external I/F 202, various programs stored in the ROM 207, and setting information. The RAM 208 also stores information on the sheet processing apparatus 200 (e.g., information on the number of (0 to n) sheet processing apparatuses 200 connected to the printing apparatus 100, information on the function of each sheet processing apparatus, or the connection order of the sheet processing apparatuses).

An HDD (Hard Disk Drive) 209 includes a hard disk, and a drive unit which reads/writes data from/to the hard disk. The HDD 209 is a large-capacity storage device which stores image data input from the scanner unit 201 and external I/F 202 and compressed by a compression/decompression unit 210. The control unit 205 instructs the printer unit 203 to print image data stored in the HDD 209 based on an instruction from the user. The control unit 205 transmits image data stored in the HDD 209 to an external apparatus such as the PC 103 via the external I/F 202 based on an instruction from the user.

The compression/decompression unit 210 compresses/decompresses image data and the like stored in the RAM 208 and HDD 209 in accordance with various compression schemes such as JBIG and JPEG.

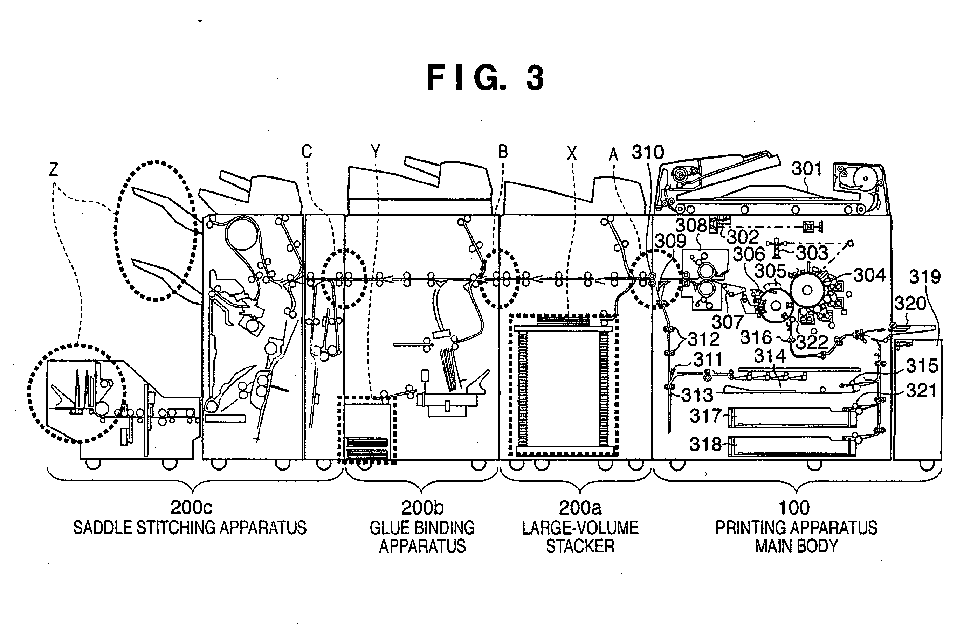

The configuration of the printing system 1000 will be explained with reference to Fig. 3. Fig. 3 is a side sectional view showing an internal configuration of the printing system 1000. The printing system 1000 is made up of the printing apparatus 100 and the sheet processing apparatus 200 connected to it.

The structure of the printing apparatus 100 will be explained first. An auto document feeder (ADF) 301 separates a document bundle on the support surface of the document tray sequentially in the order of pages from the first document sheet, and feeds each document sheet to the glass document table in order to scan the document sheet by a scanner 302.

The scanner 302 scans the image of the document sheet fed onto the glass document table, and converts the image into image data by a CCD. A rotary polygon mirror 303 receives a light ray (e.g., a laser beam) modulated in accordance with the image data, and irradiates a photosensitive drum 304 with the light ray as a reflected scan beam via a reflecting mirror. A latent image formed by the laser beam on the photosensitive drum 304 is developed with toner, and the toner image is transferred onto a sheet material on a transfer drum 305. A series of image forming processes is executed sequentially with yellow (Y), magenta (M), cyan (C), and black (K) toners, forming a full-color image. After four image forming processes, the sheet material bearing the full-color image is separated by a separation gripper 306 from the transfer drum 305, and conveyed to a fixing unit 308 by a pre-fixing conveyor 307. The fixing unit 308 has a combination of rollers and belts, and incorporates a heat source such as a halogen heater. The fixing unit 308 fuses and fixes, by heat and pressure, toner on a sheet material bearing a toner image. A delivery flapper 309 is swingable about the swing shaft, and regulates the sheet material conveyance direction. When the delivery flapper 309 swings clockwise in Fig. 3, a sheet material is conveyed straight, and discharged outside the apparatus by delivery rollers 310. The control unit 205 controls the printing apparatus 100 to execute single-sided printing according to this sequence.

To form images on the two surfaces of a sheet material, the delivery flapper 309 swings counterclockwise in Fig. 3, and the course of the sheet material changes to the downward direction to supply the sheet material to the double-sided conveyance section. The double-sided conveyance section has a reverse flapper 311, reverse rollers 312, a reverse guide 313, and a double-sided tray 314. The reverse flapper 311 swings about the swing shaft, and regulates the sheet material conveyance direction. To process a double-sided print job, the control unit 205 controls to swing the reverse flapper 311 counterclockwise in Fig. 3 to supply a sheet having the first surface printed by the printer unit 203 to the reverse guide 313 via the reverse rollers 312. While the reverse rollers 312 clamp the trailing end of the sheet material, the reverse rollers 312 temporarily stop, the reverse flapper 311 swings clockwise in Fig. 3, and the reverse rollers 312 rotate backward. The sheet is switched back to swap over its trailing and leading ends, and then the sheet is guided to the double-sided tray 314. The double-sided tray 314 temporarily supports the sheet material, and a refeed roller 315 supplies the sheet material again to registration rollers 316. At this time, the sheet material is sent while a surface opposite to the first surface in the transfer process faces the photosensitive drum. The second image is formed on the second surface of the sheet by the same process as that described above. After the images are formed on the two surfaces of the sheet material, the sheet undergoes the fixing process and is discharged outside from the printing apparatus main body via the delivery rollers 310. The control unit 205 controls the printing apparatus 100 to execute double-sided printing according to this sequence.

The printing apparatus 100 comprises a paper feed section which stores sheets necessary for print processing. The paper feed section has paper feed cassettes 317 and 318 (each capable of storing, e.g., 500 sheets), a paper feed deck 319 (capable of storing, e.g., 5,000 sheets), and a manual feed tray 320. The paper feed cassettes 317 and 318 and the paper deck 319 allow setting sheets of different sizes and materials discriminatively in the respective paper feed units. The manual feed tray 320 also allows setting various sheets including a special sheet such as an OHP sheet. The paper feed cassettes 317 and 318, the paper deck 319, and the manual feed tray 320 respectively have paper feed rollers, which successively feed sheets one by one.

The sheet processing apparatuses 200 will be explained. Note that an arbitrary number of (maximum of five) sheet processing apparatuses 200 of arbitrary types are connectable as long as they can convey a sheet from an upstream apparatus to a downstream apparatus via the sheet feeding path. For example, a large-volume stacker 200a, glue binding apparatus 200b, and saddle stitching apparatus 200c are connected in order of closeness to the printing apparatus 100, and selectively available in the printing system 1000. Each sheet processing apparatus 200 has a sheet discharge portion, and the user can take out a processed sheet from the sheet discharge portion of the sheet processing apparatus.

The control unit 205 accepts, together with a print execution request via the operation unit 204, a request to execute sheet processing of a type desired by the user among sheet processing candidates of types executable by the sheet processing apparatuses 200 connected to the printing apparatus 100. Upon accepting a print execution request for a target job from the user via the operation unit 204, the control unit 205 causes the printer unit 203 to execute print processing necessary for the job. The control unit 205 controls to convey printed sheets of the job via the sheet feeding path to a sheet processing apparatus capable of executing sheet processing desired by the user. Then, the control unit 205 causes the sheet processing apparatus to execute the sheet processing.

Assume that a target job whose print execution request is accepted from the user requires large-volume stacking processing by the large-volume stacker 200a when the printing system 1000 has a system configuration shown in Fig. 3. This job is called a "stacker job".

When processing the stacker job in the system configuration of Fig. 3, the control unit 205 controls to convey sheets of the job printed by the printing apparatus 100 into the large-volume stacker via point A in Fig. 3. Then, the control unit 205 causes the large-volume stacker 200a to stack the sheets of the job. The control unit 205 causes the large-volume stacker 200a to hold the printed materials of the job stacked in the large-volume stacker 200a at delivery destination X inside the large-volume stacker 200a without conveying them to another apparatus (e.g., a succeeding apparatus).

The user can directly take out, from delivery destination X, the printed materials of the stacker job held at delivery destination X in Fig. 3. This can omit a series of apparatus operations and user operations to convey sheets to the most downstream delivery destination Z in the sheet conveyance direction in Fig. 3 and take out the printed materials of the stacker job from delivery destination Z.

Assume that a target job whose print execution request is accepted from the user requires sheet processing (e.g., glue binding of case binding or pad binding) by the glue binding apparatus 200b in the system configuration of Fig. 3. This job is called a "glue binding job".

When processing the glue binding job in the system configuration of Fig. 3, the control unit 205 controls to convey sheets printed by the printing apparatus 100 into the glue binding apparatus 200b via points A and B in Fig. 3. Then, the control unit 205 causes the glue binding apparatus 200b to bind the sheets of the job with glue. The control unit 205 causes the glue binding apparatus 200b to hold the printed materials of the job glue-bound by the glue binding apparatus 200b at delivery destination Y inside the glue binding apparatus 200b without conveying them to another apparatus (e.g., a succeeding apparatus).

Assume that a target job whose print execution request is accepted from the user requires sheet processing by the saddle stitching apparatus 200c in the system configuration of Fig. 3. The sheet processing by the saddle stitching apparatus 200c includes, for example, saddle stitching, punching, cutting, shift delivery, and folding. This job is called a "saddle stitching job".

When processing the saddle stitching job by the system configuration in Fig. 3, the control unit 205 controls to convey sheets of the job printed by the printing apparatus 100 into the saddle stitching apparatus 200c via points A, B, and C. Then, the control unit 205 causes the saddle stitching apparatus 200c to process the sheets of the job. The control unit 205 causes the saddle stitching apparatus 200c to hold the printed materials of the saddle stitching job at delivery destination Z in the saddle stitching apparatus 200c.

Delivery destination Z has a plurality of delivery destination candidates. This is because the saddle stitching apparatus can execute a plurality of types of sheet processes and the delivery destination changes according to the particular sheet process.

As described with reference to Figs. 1 to 3, the printing system 1000 according to the embodiment allows connecting a plurality of sheet processing apparatuses to the printing apparatus 100. These sheet processing apparatuses can be arbitrarily combined and connected to the printing apparatus 100. The connection order of the sheet processing apparatuses can be freely changed as long as the sheet feeding paths of the sheet processing apparatuses link with each other. A plurality of types of sheet processing apparatus candidates is connectable to the printing apparatus 100.

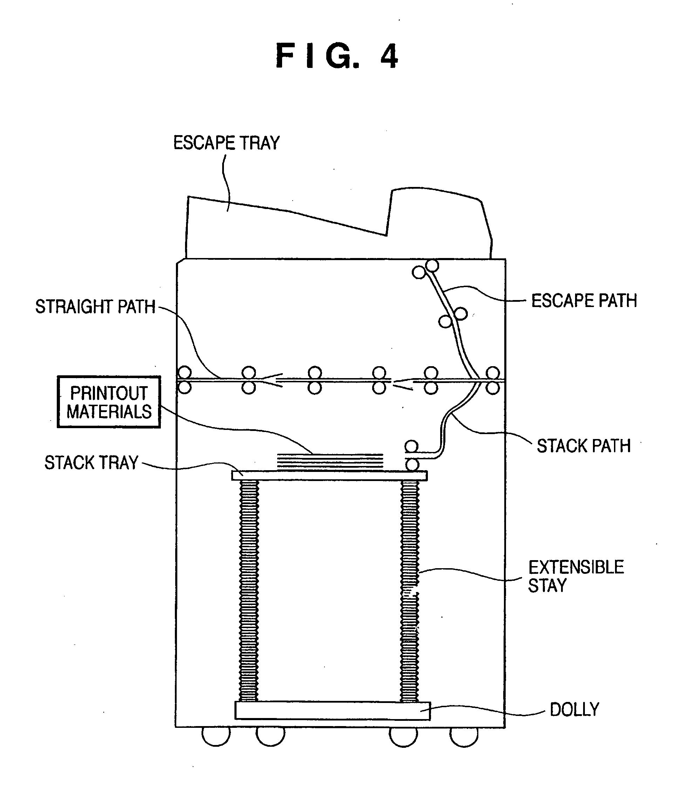

The internal structures of the sheet processing apparatuses connectable to the printing apparatus 100 will be explained for each type with reference to Figs. 4 to 6.

The internal structure of the large-volume stacker will be explained with reference to the sectional view shown in Fig. 4. The large-volume stacker conveys a sheet from an upstream apparatus selectively to one of three feeding paths (escape path, stack path, and straight path).

The stack path in the large-volume stacker is a sheet feeding path for conveying sheets to the stack tray. The stack tray in Fig. 4 is a stacking unit mounted on an extensible stay. A demountable dolly supports the extensible stay from below it. With the dolly, the operator can carry sheets stacked on the stack tray.

Assume that the control unit 205 accepts a request from the user via the operation unit 204 to execute a job set to perform sheet stacking processing by the large-volume stacker. In this case, the control unit 205 conveys sheets printed by the printing apparatus 100 to the stack path of the large-volume stacker, and delivers them to the stack tray via the stack path.

The straight path of the large-volume stacker shown in Fig. 4 is a sheet feeding path for conveying, to a succeeding apparatus, sheets of a job requiring no sheet stacking processing using the stack tray of the large-volume stacker.

The escape path is a sheet feeding path for discharging sheets to the escape tray (also called a sample tray). The escape path is used to output sheets without stacking them. For example, when confirming outputs (proof print), printed materials are conveyed to the escape path and can be taken out from the escape tray.

A plurality of sheet sensors necessary to detect the sheet conveyance status and paper jams is arranged on the sheet feeding path in the large-volume stacker.

The large-volume stacker comprises a CPU (not shown), and the CPU notifies the control unit 205 of sheet detection information from each sensor via a signal line for data communication. Based on the information from the large-volume stacker, the control unit 205 obtains information regarding the sheet conveyance status and paper jams in the large-volume stacker. When another sheet processing apparatus is connected between the large-volume stacker and the printing apparatus 100, a CPU (not shown) of that other sheet processing apparatus notifies the control unit 205 of sensor information of the large-volume stacker.

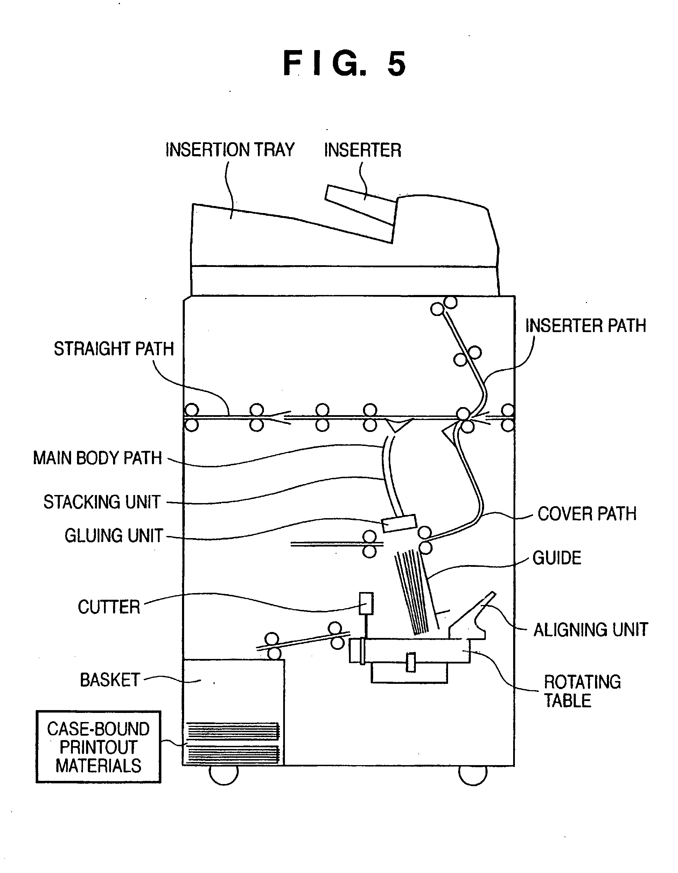

The internal structure of the glue binding apparatus will be explained with reference to the sectional view shown in Fig. 5. The glue binding apparatus conveys a sheet from an upstream apparatus selectively to one of three feeding paths (cover path, main body path, and straight path).

The glue binding apparatus also has an inserter path. The inserter path is a sheet feeding path for conveying a sheet on the insertion tray to the cover path.

The straight path of the glue binding apparatus in Fig. 5 is a sheet feeding path for conveying, to a succeeding apparatus, sheets of a job requiring no glue binding by the glue binding apparatus.

The main body path and cover path of the glue binding apparatus shown in Fig. 5 are sheet feeding paths for conveying sheets necessary to create case-bound printed materials.

For example, when creating case-bound printed materials using the glue binding apparatus, the control unit 205 causes the printer unit 203 to print image data of the body on sheets serving as the body of the case-bound printed materials. Case-bound printed materials of one booklet are created by wrapping a bundle of body sheets for one booklet with one cover. The body sheet bundle in case binding will be called a "main body".

The control unit 205 controls to convey sheets printed by the printing apparatus 100 to the main body path shown in Fig. 5. In case binding, the control unit 205 causes the glue binding apparatus to wrap the main body printed by the printing apparatus 100 with a cover sheet conveyed via the cover path.

For example, the control unit 205 causes the glue binding apparatus to sequentially stack main body sheets conveyed from an upstream apparatus on the stacking unit via the main body path in Fig. 5. After stacking sheets bearing body data on the stacking unit by the number of sheets of one booklet, the control unit 205 controls to convey one cover sheet necessary for the job via the cover path. The control unit 205 controls a gluing unit in Fig. 5 to glue the spine of the sheet bundle of one set corresponding to the main body. Then, the control unit 205 controls the gluing unit to bond the spine of the main body to the center of the cover. In bonding the main body to the cover, the main body is conveyed and pushed down in the apparatus. As a result, the cover is folded to wrap the main body with one cover. The sheet bundle of one set is stacked on a rotating table in Fig. 5 along the guide.

After the sheet bundle of one set is set on the rotating table in Fig. 5, the control unit 205 causes a cutter in Fig. 5 to cut the sheet bundle. At this time, the cutter can execute three-side cutting processing to cut three edges of the sheet bundle of one set other than an edge serving as the spine. The control unit 205 uses an aligning unit to push the sheet bundle having undergone three-side cutting processing toward a basket, putting the sheet bundle into the basket in Fig. 5.

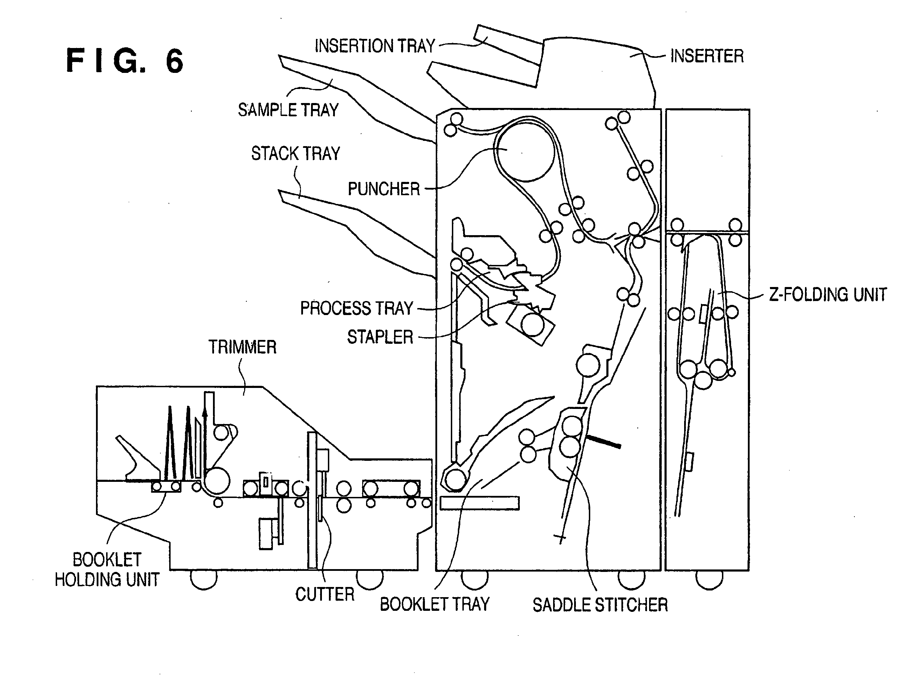

The internal structure of the saddle stitching apparatus will be explained with reference to the sectional view shown in Fig. 6. The saddle stitching apparatus comprises various units for selectively executing stapling, cutting, punching, folding, shift delivery, saddle stitching, and the like for sheets from the printing apparatus 100. The saddle stitching apparatus does not have a straight path for conveying sheets to a succeeding apparatus. For this reason, the saddle stitching apparatus is connected last, as shown in Fig. 3, when connecting a plurality of sheet processing apparatuses to the printing apparatus 100.

As shown in Fig. 6, the saddle stitching apparatus has a sample tray and stack tray outside the apparatus, and a booklet tray inside the apparatus.

Upon accepting an instruction to staple sheets by the saddle stitching apparatus, the control unit 205 causes the saddle stitching apparatus to sequentially stack sheets printed by the printing apparatus 100 on the process tray inside the saddle stitching apparatus. After stacking sheets of one bundle on the process tray, the control unit 205 causes a stapler to staple them. The control unit 205 causes the saddle stitching apparatus to discharge the stapled sheet bundle from the process tray to the stack tray in Fig. 6.

When executing a job for which the control unit 205 accepts an instruction to Z-fold sheets by the saddle stitching apparatus, the control unit 205 causes a Z-folding unit to Z-fold sheets printed by the printing apparatus 100. The control unit 205 controls to make the folded sheets pass through the saddle stitching apparatus and deliver them to a discharge tray such as the stack tray or sample tray.

Upon accepting an instruction to perform punching by the saddle stitching apparatus, the control unit 205 causes a puncher to punch sheets printed by the printing apparatus 100. The control unit 205 controls to make the punched sheets pass through the saddle stitching apparatus and deliver them onto a discharge tray such as the stack tray or sample tray.

When executing a job for which the control unit 205 accepts an instruction to saddle-stitch sheets by the saddle stitching apparatus, the control unit 205 causes a saddle stitcher to stitch a bundle of sheets by one set at two center portions. The control unit 205 causes the saddle stitcher to clamp the sheet bundle at the center by rollers and fold the sheets into two at the center, thereby creating a booklet such as a brochure. The sheet bundle saddle-stitched by the saddle stitcher is conveyed onto the booklet tray.

Upon accepting a cutting instruction for a job for which the control unit 205 accepts an instruction to saddle-stitch sheets, the control unit 205 controls to convey a saddle-stitched sheet bundle from the booklet tray to a trimmer. The control unit 205 causes a cutter to cut the sheet bundle conveyed to the trimmer, and a booklet holding unit to hold the sheet bundle. The saddle stitching apparatus in Fig. 6 can also cut three edges of a saddle-stitched sheet bundle.

When the saddle stitching apparatus does not have any trimmer, the operator can take out a sheet bundle bound by the saddle stitcher from the booklet tray.

The saddle stitching apparatus can also attach a sheet (e.g., a cover sheet printed in advance) set on the insertion tray in Fig. 6 to a sheet printed by the printing apparatus 100 and conveyed from it.

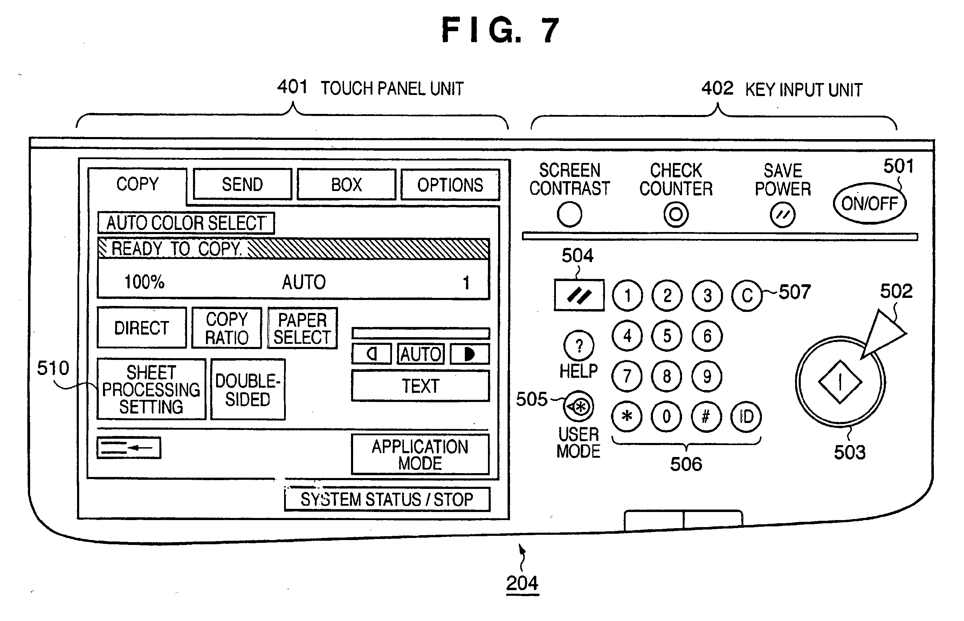

The arrangement of the operation unit 204 will be described with reference to Fig. 7. The operation unit 204 comprises a touch panel unit 401 and key input unit 402. The touch panel unit 401 is formed from an LCD (Liquid Crystal Display) and a transparent electrode adhered onto the LCD, and displays various setup windows for accepting an instruction from the user. The touch panel unit 401 has both a function of displaying various windows and an instruction input function of accepting an instruction from the user. The key input unit 402 comprises a power key 501, start key 503, stop key 502, user mode key 505, and numerical keypad 506. The start key 503 is used to cause the printing apparatus 100 to start a copy job and send job. The numerical keypad 506 is used to set a numerical value such as the number of copies.

The control unit 205 controls the printing system 1000 to perform various processes based on user instructions accepted via various windows displayed on the touch panel unit 401 and user instructions accepted via the key input unit 402.

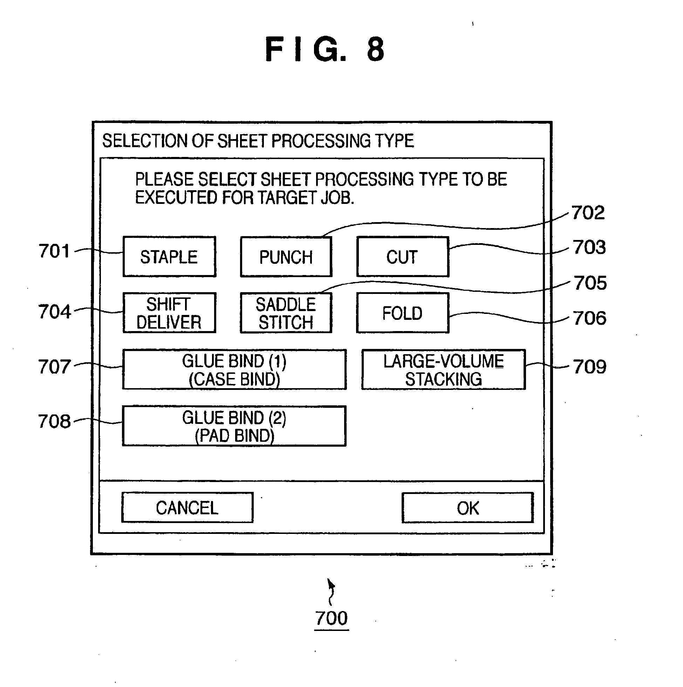

Fig. 8 shows a setup window for prompting the user to select the type of sheet processing to be executed for sheets printed by the printing apparatus 100. When the user presses a sheet processing setting key 510 in Fig. 7 displayed in the window on the touch panel unit 401, the control unit 205 causes the touch panel unit 401 to display the window in Fig. 8. This window is a setup window which allows the user to select the type of sheet processing executable by the sheet processing apparatus 200 present in the printing system 1000. For example, the user can select staple 701, punch 702, cut 703, shift delivery 704, saddle stitch 705, fold 706, glue bind (case bind) 707, glue bind (pad bind) 708, and large-volume stacking 709. The control unit 205 accepts, from the user via this setup window, settings of sheet processing to be executed for a target job, and causes the sheet processing apparatus 200 to execute the sheet processing according to the settings.

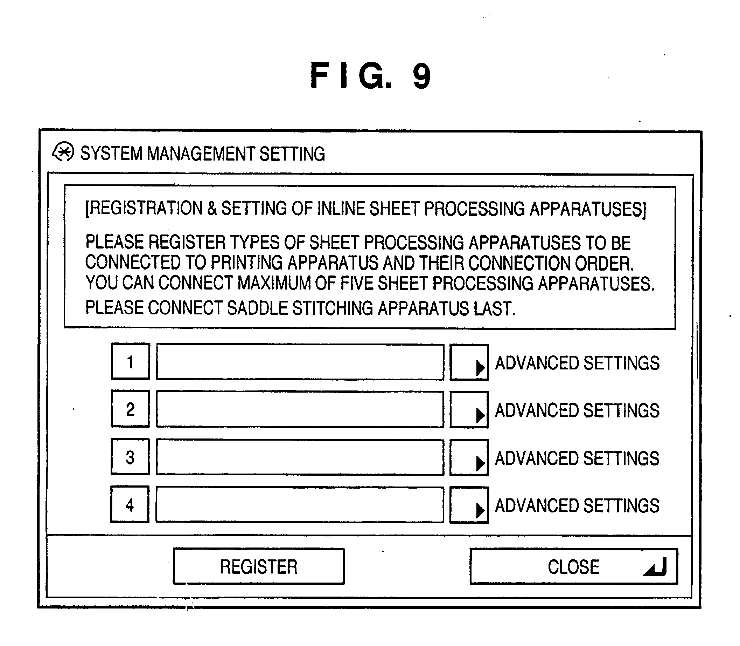

A window shown in Fig. 9 is a setup window which allows the user to register information for specifying the number, types, and connection order of sheet processing apparatuses when the sheet processing apparatuses 200 are connected to the printing apparatus 100. When the user presses the user mode key 505, the control unit 205 causes the touch panel unit 401 to display the window shown in Fig. 9.

For example, when the printing system 1000 has the system configuration as shown in Fig. 3, the user sets, in the window of Fig. 9, registration information that three sheet processing apparatuses, that is, the large-volume stacker, glue binding apparatus, and saddle stitching apparatus are connected to the printing apparatus 100 sequentially from the large-volume stacker. The control unit 205 causes the RAM 208 to hold, as system configuration information, the information on the sheet processing apparatuses 200 that is set by the user via the window in Fig. 9. The control unit 205 properly reads out and refers to the system configuration information. From the system configuration information, the control unit 205 confirms the number and connection order of sheet processing apparatuses connected to the printing apparatus 100, and sheet processing types executable by the sheet processing apparatuses.

When the user makes a setting in the window of Fig. 9 to connect the saddle stitching apparatus having no straight path between sheet processing apparatuses, the control unit 205 causes the touch panel unit 401 to present an error display in order to invalidate the setting. Further, as shown in Fig. 9, the control unit 205 causes the touch panel unit 401 to display guidance information and notify the user of cancellation of this setting and connection of the saddle stitching apparatus last.

The embodiment exemplifies the operation unit 204 of the printing apparatus 100 as an example of a user interface unit applied to the printing system 1000, but another user interface unit is also available. For example, the printing system 1000 may be configured to be able to execute processing based on an instruction from the user interface unit of an external apparatus such as the PC 103 or PC 104.

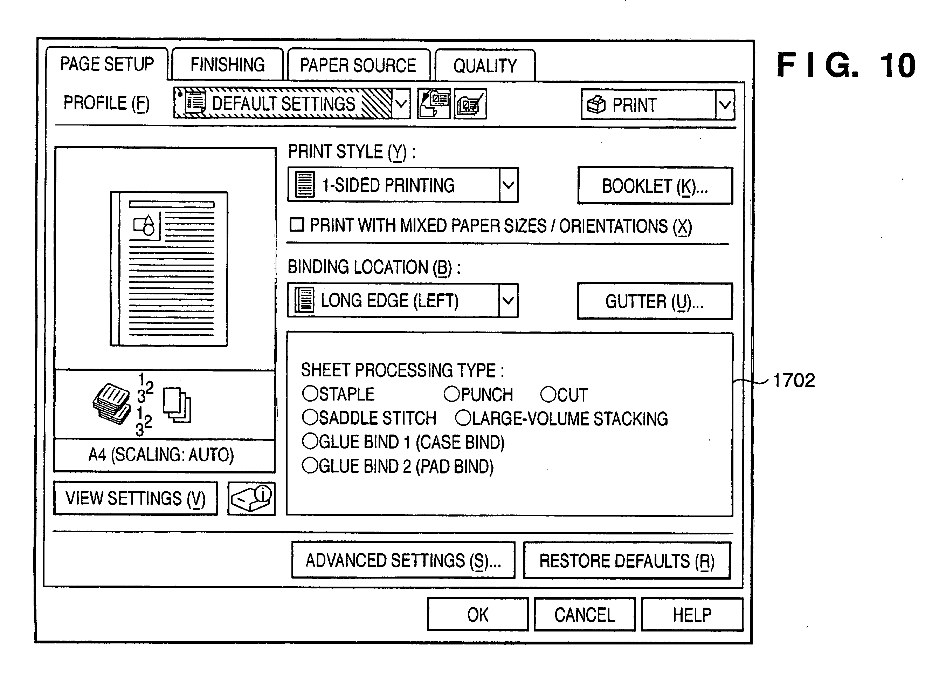

When the external apparatus remote-controls the printing system 1000, the display unit of the external apparatus displays a setup window relevant to the printing system 1000, as shown in Fig. 10. This will be exemplified using the PC 104. Fig. 10 shows an example of a window on the display of the PC 104.

Upon accepting a print request from the user, the CPU of the PC 104 causes the display to present the window as shown in Fig. 10. The CPU accepts the settings of print processing conditions from the user of the PC 104 via the window. For example, the CPU of the PC 104 accepts, from the user via a setting field 1702, the type of sheet processing to be executed by the sheet processing apparatus 200 for a print job for which the PC 104 issues a print execution request. Upon accepting the print execution request in response to the pressing of an OK key shown in Fig. 10, the CPU of the PC 104 associates the print processing conditions accepted via the window with image data to be printed. The CPU of the PC 104 controls to transmit the resultant data as one job to the printing system 1000 via the network 101.

In the printing system 1000, upon accepting the print execution request of the job via the external I/F 202, the control unit 205 controls the printing system 1000 to process the job from the PC 104 based on the print processing conditions from the PC 104.

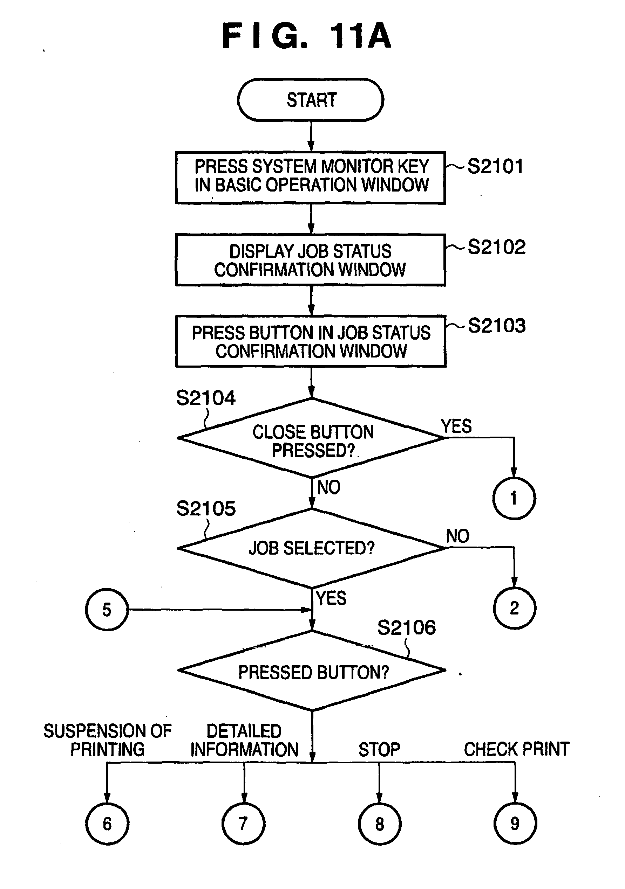

Control to perform specific processing for a job processed in the printing system 1000 will be explained with reference to Figs. 11A to 25B. The control unit 205 of the printing apparatus 100 executes this control.

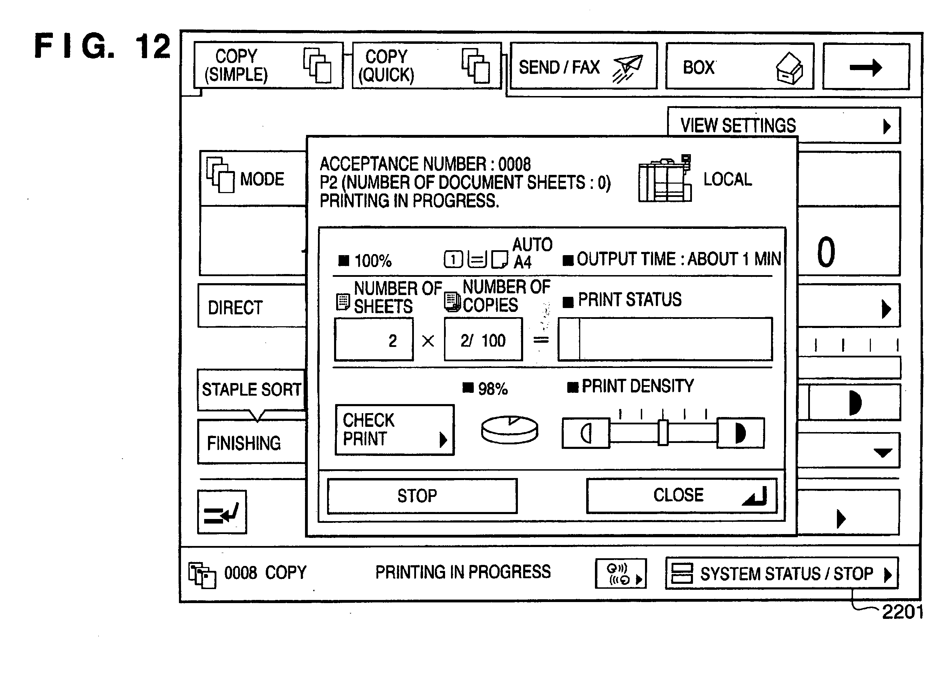

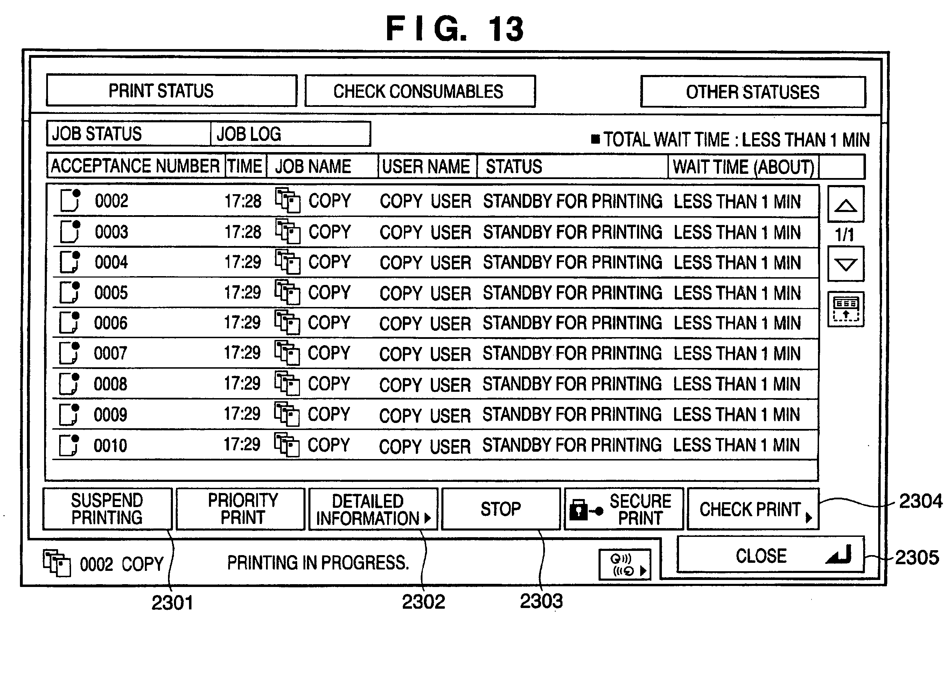

Fig. 12 shows an example of a basic operation window (corresponding to the above-described initial setup window) displayed on the touch panel unit 401 of the printing apparatus 100. In S2101 shown in Fig. 11A, when the user presses a system monitor key ("SYSTEM STATUS/STOP") 2201 in the basic operation window of Fig. 12, the control unit 205 detects the press and advances the control to S2102. In S2102, the control unit 205 controls the touch panel unit 401 to display a window (to be referred to as a job status confirmation window hereinafter) to confirm a job status as illustrated in Fig. 13.

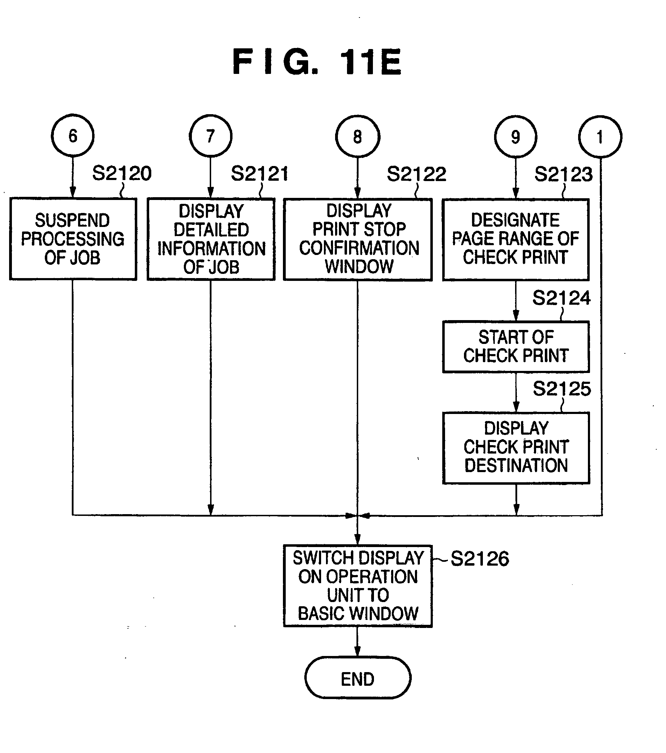

In S2103, if the user presses any one of buttons (2301,2302,2303,2304,2305) in the job status confirmation window displayed on the touch panel unit 401, the control unit 205 detects the press and advances the control to S2104. In S2104, the control unit 205 determines whether the button pressed by the user is a "close" button 2305 in the job status confirmation window. If the control unit 205 determines that the user has pressed the "close" button 2305, it advances the control to S2126 shown in Fig. 11E. In S2126, the control unit 205 controls the touch panel unit 401 to display the basic operation window shown in Fig. 12.

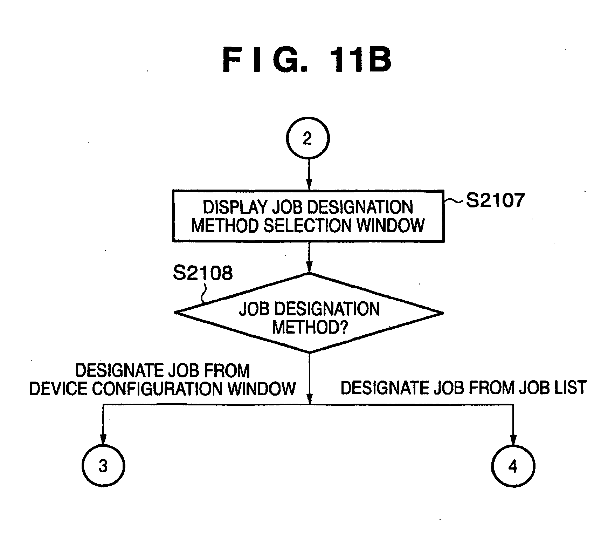

If the control unit 205 determines in S2104 that the button pressed by the user is not the "close" button 2305, i.e. the button pressed is one of the buttons 2301 to 2304 used to select the kind of processing to be applied to a job, it advances the control to S2105. In S2105, the control unit 205 determines whether the user has already selected a job before pressing one of the buttons 2301 to 2304. If the control unit 205 determines that the user has not already selected any job, it advances the control to S2107 shown in Fig. 11B.

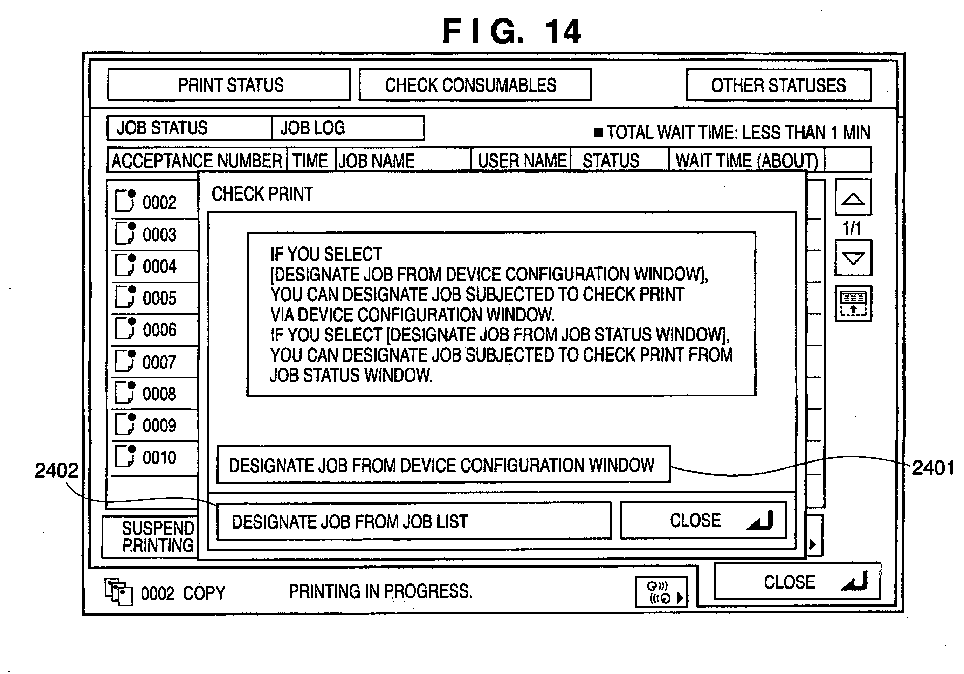

In S2107, the control unit 205 controls the touch panel unit 401 to display a job designation method selection window illustrated in Fig. 14. In this example, it is assumed that the user pressed the button 2304, in order to select "check print" processing, when the job status confirmation window of Fig. 13 was displayed. In this example, the job designation method selection window contains the title "CHECK PRINT" and advice for the user that he/she can now select which job selection method to use for the purpose of selecting the job to be subjected to the "check print" processing. In the present embodiment, the user can choose to use either a first job selection method, in which the job is selected using a "device configuration window", or a second job selection method in which the job is selected using a "job list". In S2108, the control unit 205 determines whether the user has pressed either a "designate job from device configuration window" button 2401 to choose the first method or a "designate job from job list" button 2402 to choose the second method in the job designation method selection window shown in Fig. 14.

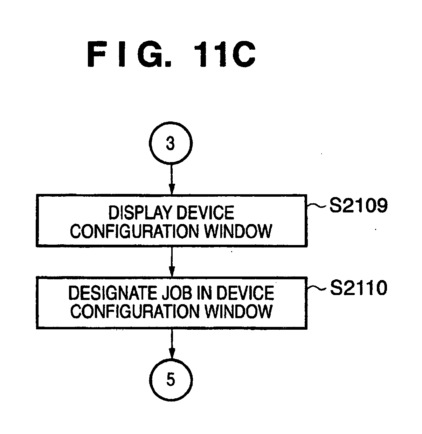

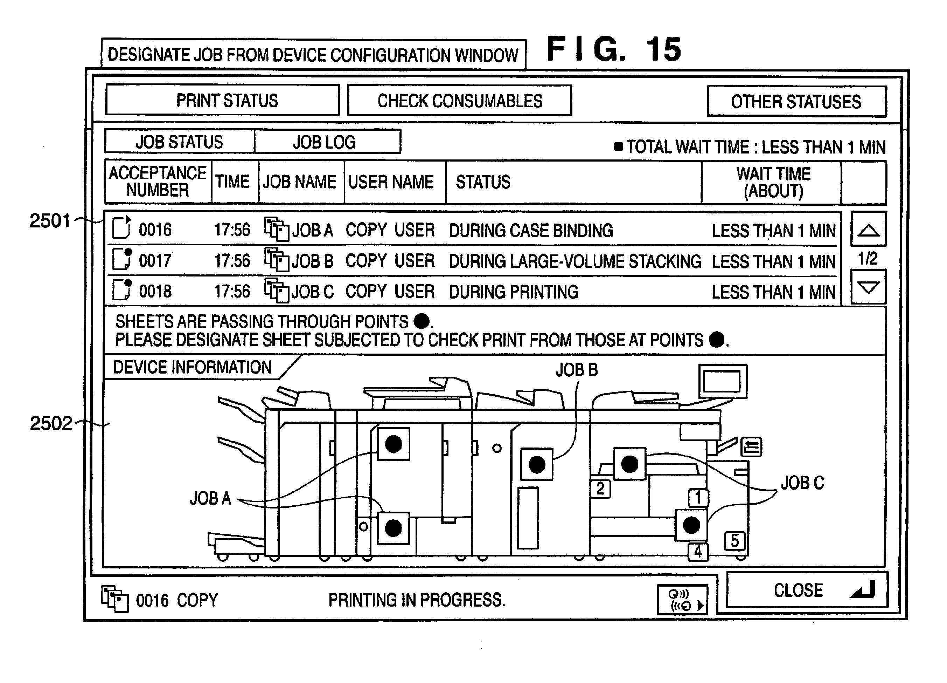

First job selection method
If the control unit 205 determines in S2108 that the user has pressed the button 2401, it advances the control to S2109 shown in Fig. 11C. In S2109, the control unit 205 controls the touch panel unit 401 to display a screen including a device configuration window 2502 illustrated in Fig. 15.

The device configuration window 2502 is a window that associates information representing a configuration of the printing system 1000 with information indicating presence of a job processed by the printing system 1000.

Additionally, the device configuration window 2502 is a window that associates information representing the configuration of the printing system 1000 with information indicating locations of sheets of the job being processed by the printing system 1000.

The control unit 205 determines the locations of sheets based on a detection result of sheets by sensors located on places in paper paths inside the printing system 1000.

The device configuration window 2502 includes graphical bit map image data (hereinafter graphical images) visibly representing a current configuration of the printing system 1000. The graphical images are generated based on system configuration information registered in a memory. In Fig. 15, the graphical images are displayed on the window such that an operator can discriminate that a large-volume stacker, a glue binding apparatus and a saddle stitching apparatus are connected to the printing apparatus 100 as the system configuration.

Furthermore, the device configuration window 2502 includes buttons for the operator to select a job being processed by the printing system 1000. The buttons (called keys on a touch panel or soft keys) are configured and displayed on the graphical images such that the operator can directly press it over the touch panel.

Each button displayed on the device configuration window 2502 corresponds to one of the jobs presently being processed by the printing system 1000. These buttons are displayed on the device configuration window 2502 such that the operator can discriminate whether or not sheets of jobs corresponding to each button are currently located at what place.

In the printing system 1000, for example, a job A being processed by the glue binding apparatus, a job B being stacked in the large-volume stacker and a job C being printed by the printing apparatus 100 are executed. These jobs are being executed in parallel by the printing system 1000. In this case, the control unit 205 controls the display of the buttons such that respective buttons corresponding to the jobs A, B and C are displayed on the window 2502 as shown in Fig. 15. As a result, the operator can confirm that the jobs A, B and C are executed by the printing system 1000.

In Fig. 15, two buttons corresponding to the job A are displayed on two relevant places of the graphical image representing the glue binding apparatus such that the operator can confirm that sheets of the job A are being conveyed at two places inside the glue binding apparatus. When the operator directly presses either button, the control unit 205 controls to select the job A.

Moreover, in Fig. 15, a button corresponding to the job B is displayed on a relevant place of the graphical image representing the large-volume stacker such that the operator can confirm that sheets of the job B are being conveyed at the place inside the large-volume stacker. When the operator directly presses the button, the control unit 205 controls to select the job B.

Furthermore, in Fig. 15, two buttons corresponding to the job C are displayed on two relevant places of the graphical image representing the printing apparatus such that the operator can confirm that sheets of the job C are being conveyed at two places inside the printing apparatus. When the operator directly presses either button, the control unit 205 controls to select the job C.

Thus, the control unit 205 controls the display such that the buttons corresponding to the jobs are displayed on the device configuration window 2502. As a result, the operator can determine whether or not sheets of target jobs being processed are conveyed at what place of the paper paths inside the printing system 1000. The control unit 205 controls the display such that the operator can directly select a job using the buttons displayed on the device configuration window 2502 from among jobs being processed by the printing system 1000.

Note that, upon displaying the device configuration window 2502, the system configuration at the instant of pressing of the key 2401 shown in Fig. 14 is reflected. The control unit 205 determines a number of buttons and display positions displayed on the device configuration window 2502 based on information outputted from the sensors when the key 2401 is pressed.

Moreover, the operator is able to designate the desired processing using keys 2301 to 2304 before the operator selects a job using the buttons displayed on the device configuration window 2502. Therefore, the control unit 205 makes it possible to immediately execute the desired processing related to the selected job by the printing system 1000. According to the present embodiment, it is possible to exercise control over the printing system 1000 in a manner which, at least in some situations, may be more convenient for the operator and/or more speedily than in the conventional configuration in which the operator determines desired processing after the job has been selected.

In S2110 after S2109, if the operator selects a job from among the jobs which are presently being processed by the printing system 1000, by pressing one of the buttons displayed on the device configuration window 2502 shown in Fig. 15, the control unit 205 detects the selection and advances the control to S2106 shown in Fig. 11A.

Incidentally, it will also be seen from Fig. 15 that in this embodiment a list window 2501 is displayed on the screen in addition to the device configuration window. The list window 2501 displays jobs and device configurations in association with each other. For example, it may display an apparatus which is processing a job, or display the current step of a job in print processing. The information "DURING CASE BINDING" displayed for JOB A also indicates where sheets of that job are present in the printing system. It is also possible to select a job using the list window 2501 by pressing somewhere on the line corresponding to the job in the window. For example, after confirming that JOB A in the window 2501 has sheets in the case binding apparatus, the operator can select this job by pressing the corresponding line in the window. In this way, the operator can use the list window 2501 instead of the device configuration window 2502 to select a job. Although the present embodiment provides both the list window 2501 and the device configuration window 2502, it will be appreciated that in other embodiments it is possible to provide just one of these windows. It will also be appreciated that some conventional printing systems were capable of displaying information for use in locating sheets of a job that is affected by a jam or other problem. However, the list window 2501 differs from such systems in that it displays the information about where the sheets of a presently-processed job are located when the job is being processed without error (processed normally), i.e. before any jam or other problem has occurred. This makes it possible for an operator to select a job that is being processed without error, taking account of its location. For example, in the list window 2501 in Figure 15, the operator can see that JOB C is still in the printing apparatus. It is therefore possible for the operator to change the sheet processing to be applied to this job, after printing is finished, for example if he made a mistake when setting up the job in the first place or if he changed his mind about the desired sheet processing.

In the case in which both windows are provided, the device configuration window 2502 may display a job in process by the printing system 1000 in correspondence with the list window 2501.

In the device configuration window 2502, the color or shape of a button for selecting a job mark may change in accordance with the type and name of the job. Instead of the mark, information (e.g., job name or user name) to discriminate a job together with the button may be displayed on the device configuration window 2502.

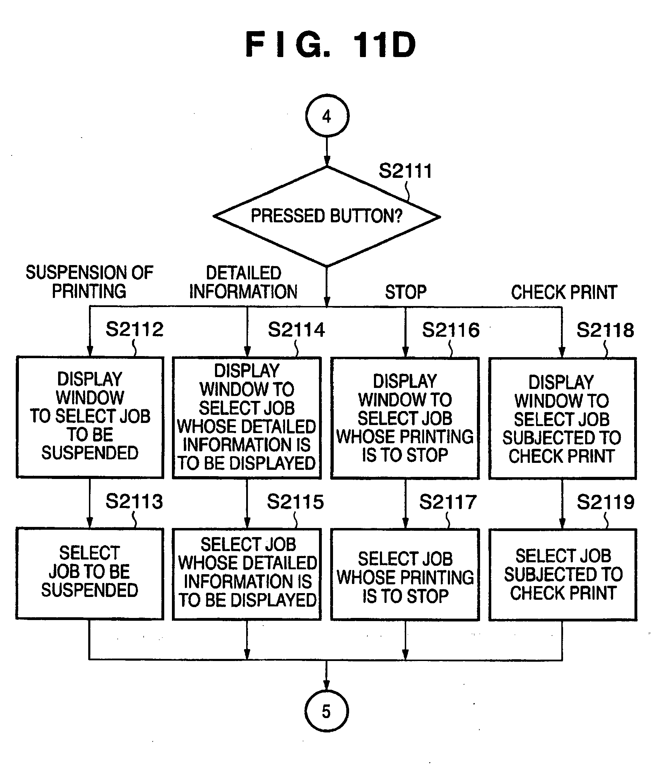

Second job selection method
When the job designation method selection window shown in Figure 14 is being displayed, if the control unit 205 determines in S2108 shown in Fig. 11B that the user has pressed the button 2402, it advances the control to S2111 shown in Fig. 11D. In S2111, the control unit 205 determines which of the buttons 2301 to 2304 was detected in S2103 as having been pressed by the user when the job status confirmation window shown in Fig. 13 was previously displayed (as a result of step 52102) .

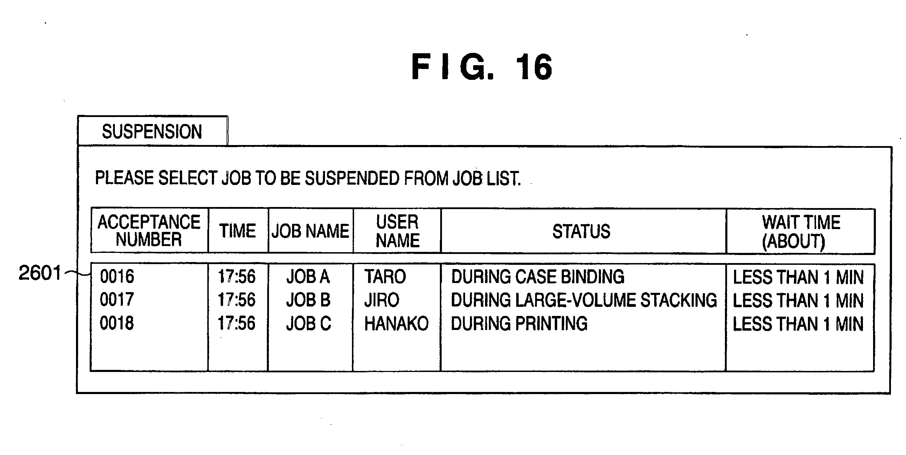

If the control unit 205 determines in S2111 that in S2103 the user pressed a "suspend printing" button 2301, it advances the control to S2112. In S2112, the control unit 205 controls the touch panel unit 401 to display a suspension selection window illustrated in Fig. 16. In S2113, if the user selects a job 2601 in the suspension selection window shown in Fig. 16, the control unit 205 detects the selection and advances the control to S2106 shown in Fig. 11A. Incidentally, instead of advancing the control to S2106, it is possible to advance the control directly to S2120 in Fig. 11E, because the kind of processing has already been confirmed as suspension of printing in S2111.

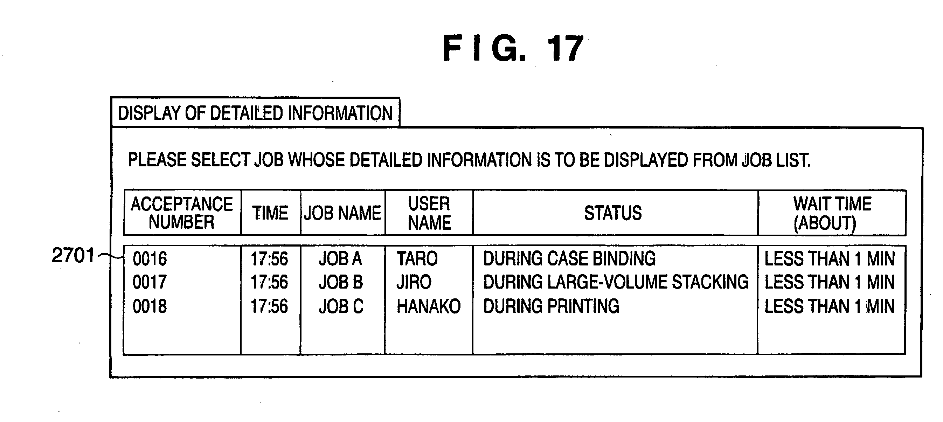

If the control unit 205 determines in S2111 that in S2103 the user pressed a "detailed information" button 2302, it advances the control to S2114. In S2114, the control unit 205 controls the touch panel unit 401 to display a detailed information display selection window illustrated in Fig. 17. In S2115, if the user selects a job 2701 in the detailed information display selection window shown in Fig. 17, the control unit 205 detects the selection and advances the control to S2106 shown in Fig. 11A. Incidentally, instead of advancing the control to S2106, it is possible to advance the control directly to S2121 in Fig. 11E, because the kind of processing has already been confirmed as displaying detailed information in S2111.

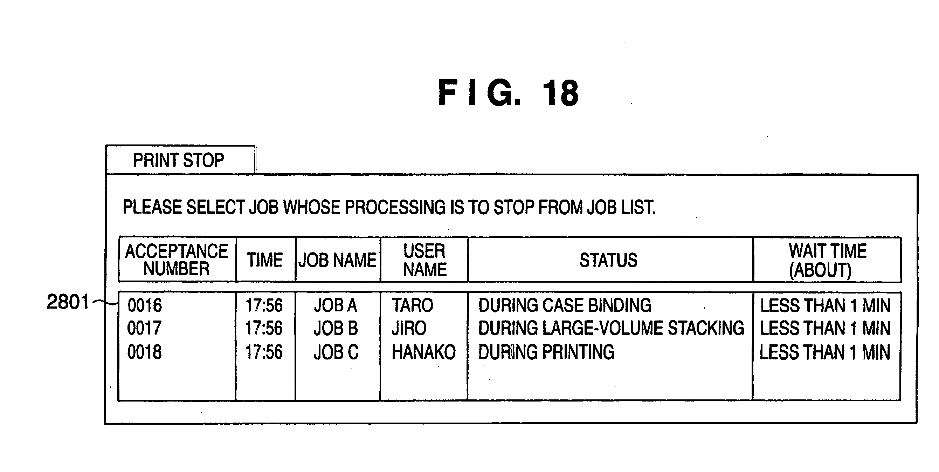

If the control unit 205 determines in S2111 that in S2103 the user pressed a "stop" button 2303, it advances the control to S2116. In S2116, the control unit 205 controls the touch panel unit 401 to displays a print stop selection window illustrated in Fig. 18. In S2117, if the user selects a job 2801 in the print stop selection window shown in Fig. 18, the control unit 205 detects the selection and advances the control to S2106 shown in Fig. 11A. Incidentally, instead of advancing the control to S2106, it is possible to advance the control directly to S2122 in Fig. 11E, because the kind of processing has already been confirmed as stopping printing in S2111.

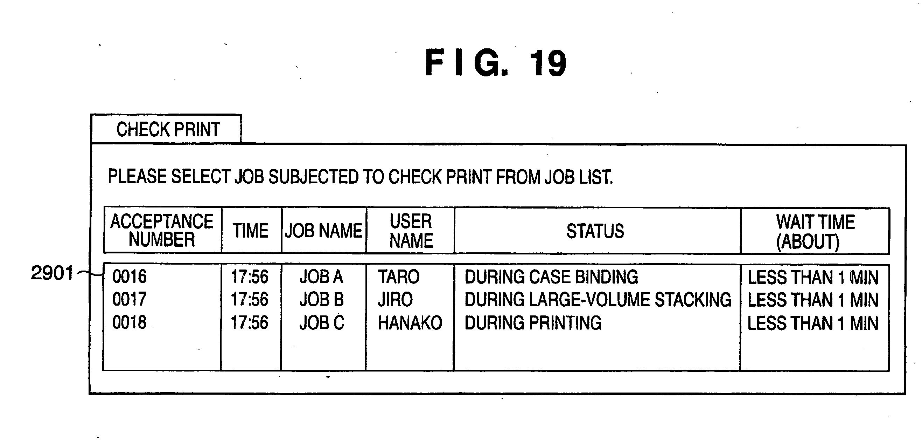

If the control unit 205 determines in S2111 that in step S2103 the user pressed the "check print" button 2304, as is the case in the example of Fig. 14, it advances the control to S2118. In S2118, the control unit 205 controls the touch panel unit 401 to display a check print selection window illustrated in Fig. 19. In S2119, if the user selects a job 2901 in the check print selection window shown in Fig. 19, the control unit 205 detects the selection and advances the control to S2106 shown in Fig. 11A. Incidentally, instead of advancing the control to S2106, it is possible to advance the control directly to S2123 in Fig. 11E, because the kind of processing has already been confirmed as checking printing in S2111.

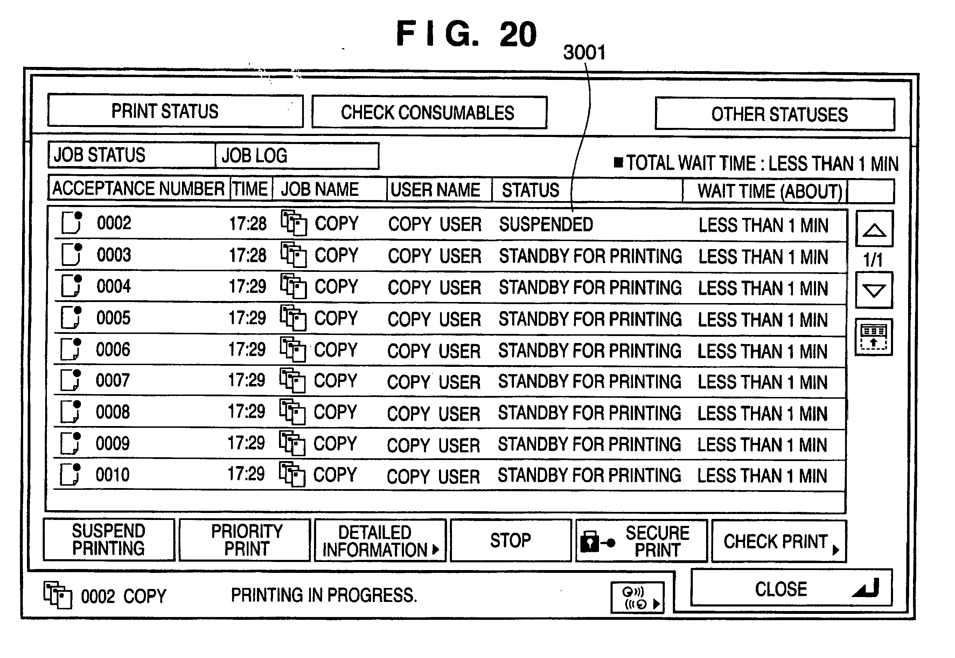

After a job has been selected by one of the two job selecting methods described above (a first selecting method for selecting the job by using a button displayed in the device configuration window 2502 shown in Fig. 15, and a second selecting method for selecting the job by using a job list like Fig. 16-19), control is returned to S2106 in Fig. 11A. The control unit 205 determines in S2106 which one of the buttons 2301 to 2304 was pressed by the user in step S2103 when the job status confirmation window shown in Fig. 13 was displayed in S2102.If the control unit 205 determines in S2106 that in S2103 the user pressed the "suspend printing" button 2301, it advances the control to S2120 shown in Fig. 11E. In S2120, the control unit 205 controls the printer unit 203 or sheet processing apparatus 200 to suspend processing of the selected job. At the same time, the control unit 205 rewrites the job status to "suspended" 3001, as illustrated in Fig. 20, and displays the job status on the touch panel unit 401.

The suspended job can be resumed to resume printing from a suspended page by the printer unit 203 or resume post-processing by the sheet processing apparatus 200.

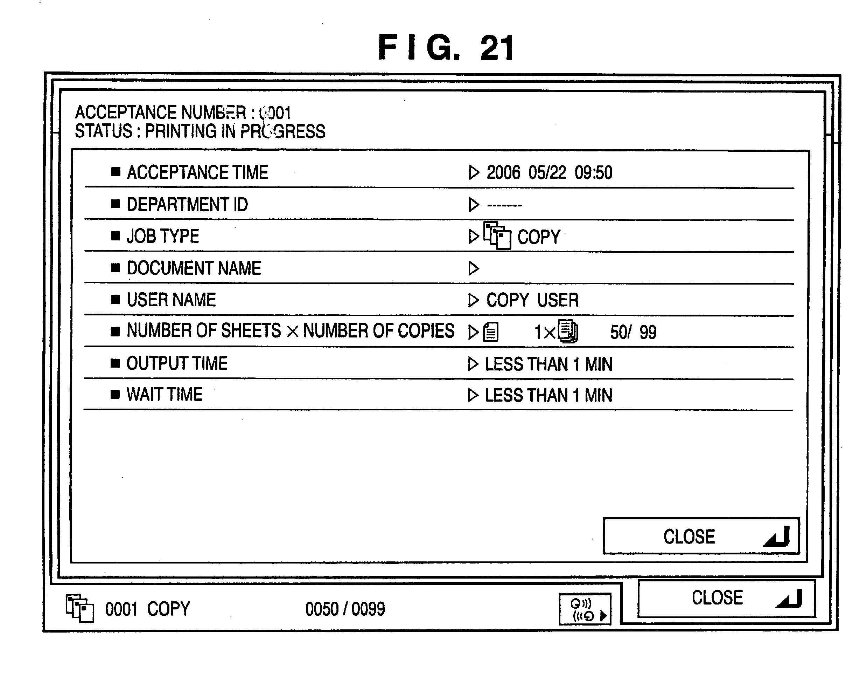

If the control unit 205 determines in S2106 that in S2103 the user pressed the "detailed information" button 2302, it advances the control to S2121 shown in Fig. 11E. In S2121, the control unit 205 controls the touch panel unit 401 to display a detailed job information window illustrated in Fig. 21.

The detailed job information window displays various types of information such as the acceptance time of a job, a management department ID, a job type, the name of a document to be printed, the name of a user who requests printing, the number of sheets, the number of copies, the expected time taken for processing, and the wait time until the start of a job.

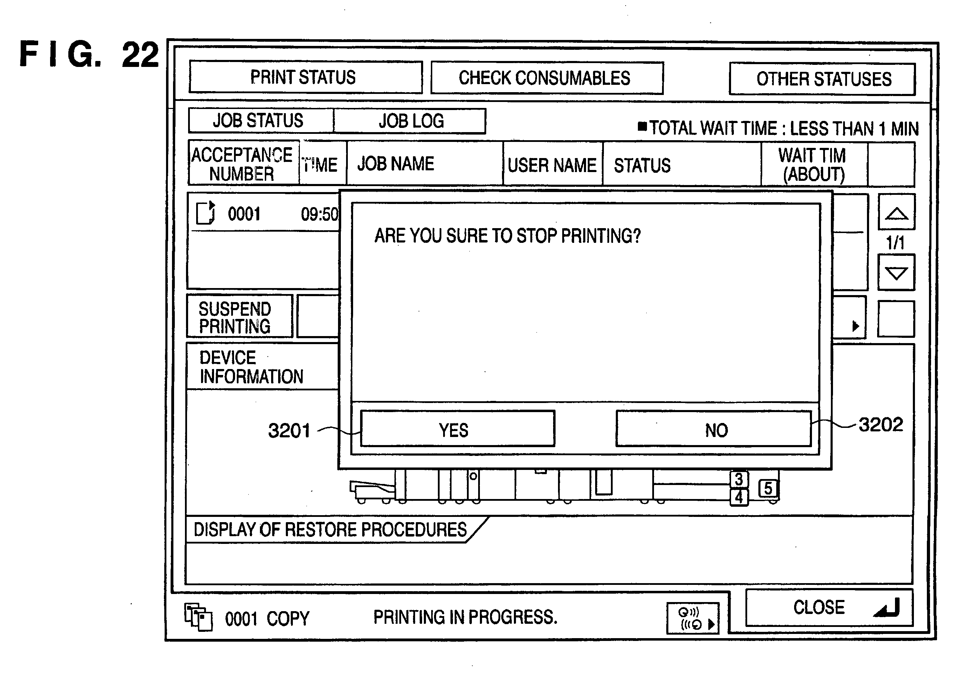

If the control unit 205 determines in S2106 that in S2103 the user pressed the "stop" button 2303, it advances the control to S2122 shown in Fig. 11E. In S2122, the control unit 205 controls the touch panel unit 401 to display a print stop confirmation window illustrated in Fig. 22.

If the user selects "print stop (YES)" 3201 in the stop confirmation window, the control unit 205 controls the printer unit 203 or sheet processing apparatus 200 to stop processing of the job selected in the above-described stop. If the user selects "cancel (NO)" 3202 in the stop confirmation window, the control unit 205 controls the touch panel unit 401 to display the basic operation window shown in Fig. 12.

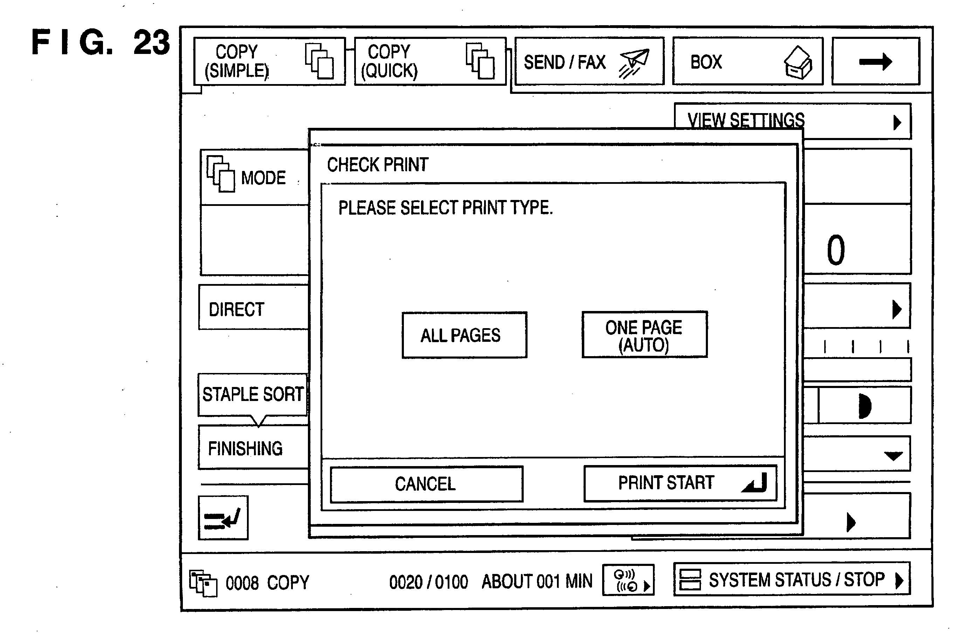

If the control unit 205 determines in S2106 that in S2103 the user pressed the "check print" button 2304, it advances the control to S2123 shown in Fig. 11E. In S2123, the control unit 205 controls the touch panel unit 401 to display a page count designation selection window for performing check print as illustrated in Fig. 23.

In the example shown in Fig. 23, the user can select whether to print all pages or only one page for check by designating the page range of check print.

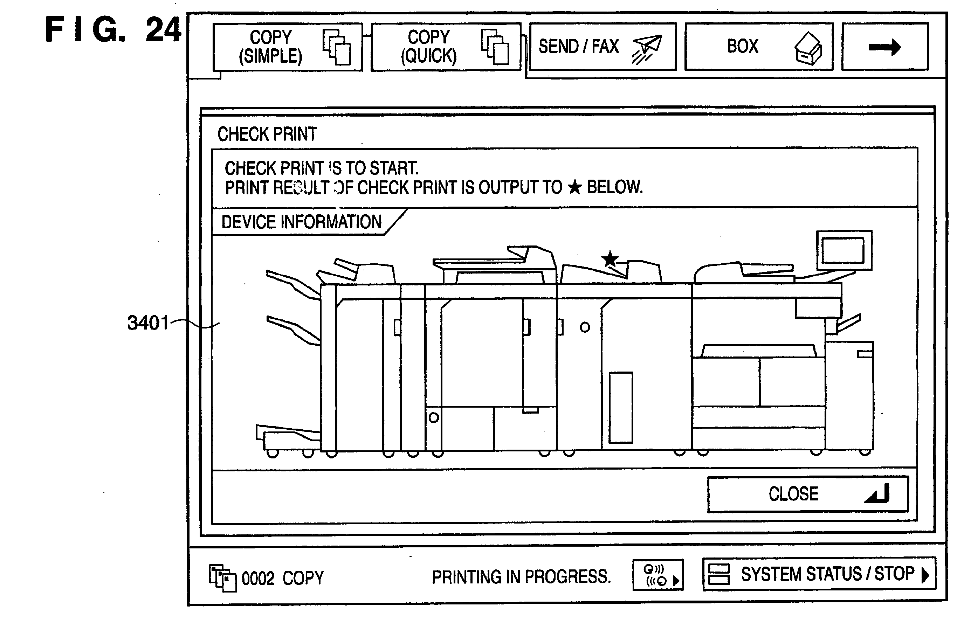

In S2124, the control unit 205 starts check print. In S2125, the control unit 205 controls the touch panel unit 401 to display a check print destination display window illustrated in Fig. 24. In the example shown in Fig. 24, a check print destination is presented to the user by marking the destination in a device configuration window 3401.

The printing apparatus 100 according to the embodiment has two functions: "test copy (test print) function" and "check print function" independent of the test print function.

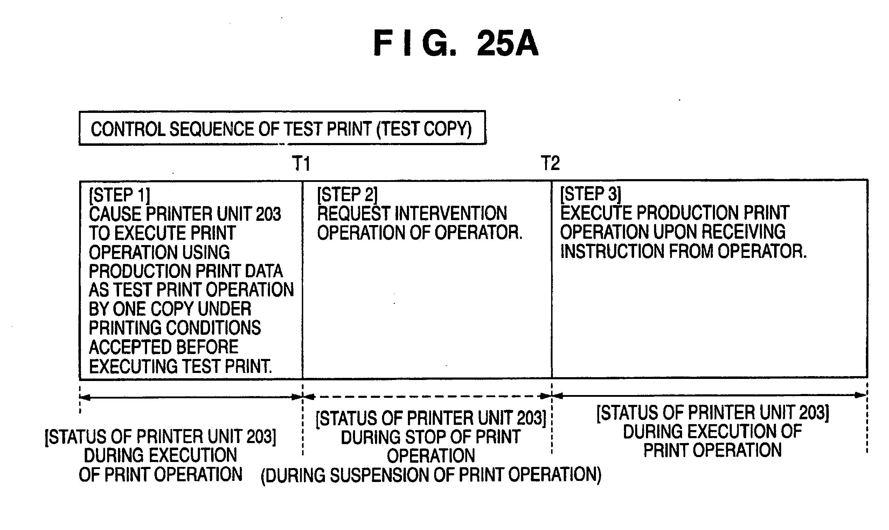

More specifically, the test print function is to execute control as illustrated in Fig. 25A. In step 1 shown in Fig. 25A, the control unit 205 causes the printer unit 203 to execute a print operation using production print data by one copy under printing conditions accepted before executing test print.

In step 2, the control unit 205 requests operator intervention work. In this step, the control unit 205 accepts a printing condition change instruction, print continuation instruction, print stop instruction, or the like. In step S2, a production print operation stands by.

If the control unit 205 receives an instruction from the operator in step 3, it causes the printer unit 203 to execute the production print operation in accordance with the instruction. If the control unit 205 receives a print stop instruction, it does not perform step 3.

If the control unit 205 receives a change instruction, it causes the printer unit 203 to execute the production print operation under setting-changed printing conditions by the number of copies accepted before executing test copy. If the control unit 205 receives a print continuation instruction, it causes the printer unit 203 to execute the production print operation under printing conditions accepted before executing test copy. The number of copies is set by subtracting one from the total number of copies accepted before executing test copy.

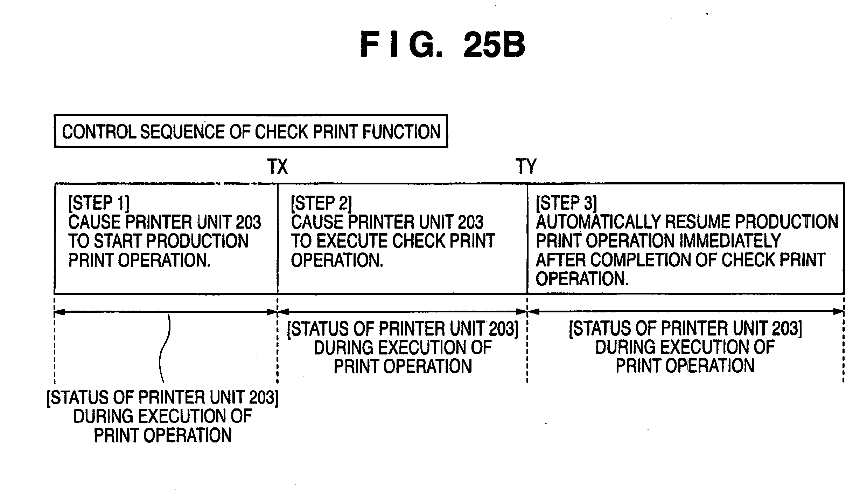

The check print function is to execute control as illustrated in Fig. 25B. In step 1 shown in Fig. 25B, the control unit 205 causes the printer unit 203 to start the production print operation.

In step 2, the control unit 205 suspends the production print operation, and causes the printer unit 203 to execute the check print operation. In this step, the control unit 205 causes the printer unit 203 to print production print data of all pages or one page.

After the end of the check print operation in step 2, the control unit 205 causes the printer unit 203 to automatically resume the production print operation in step 3. In this step, the control unit 205 causes the printer unit 203 to print only print data which have not been printed before the check print operation. However, the print operation stops immediately after receiving a request such as a suspension request or print stop request from the operator.

Effects obtained by the printing system 1000 according to the embodiment are as follows.
The printing system 1000 can solve problems assumed in Description of the Related Art. A user-friendly printing environment adaptable not only to the office environment but also to the POD environment can be built. The printing system 1000 can satisfy needs on actual work site in a printing environment such as the POD environment. Such needs include a need to operate the system at the highest productivity, and a need to reduce the workload on an operator. In particular, the printing system 1000 can achieve the following effects.

In a printing system configured by connecting a plurality of sheet processing apparatuses, a user interface displays a system configuration window which makes the configuration of the printing system correspond to information on a job in process. The operator can check a job in process.

A job can be selected via the system configuration window, and processed by the printing system.

A convenient, flexible printing environment capable of coping with situations of use and user requests assumable in the conventionally assumed POD environment can be established. Various mechanisms can be provided toward practical use of a product.

[Other Mechanisms]
A computer (e.g., the PC 103 or 104) may achieve the functions shown in the drawings in the embodiment in accordance with an externally installed program. In this case, data for displaying the same operation windows as those described in the embodiment including operation windows are externally installed to provide various user interface windows on the display of the computer. For example, this has been described with reference to a configuration based on the UI window shown in Fig. 10. In this configuration, the present invention is also applicable to a case where pieces of information including a program are supplied to an output apparatus from a storage medium such as a CD-ROM, flash memory, or FD, or from an external storage medium via a network.

As described above, a storage medium which records software program codes for implementing the functions of the above-described embodiment is supplied to a system or apparatus. The computer (CPU or MPU) of the system or apparatus reads out and executes the program codes stored in the storage medium, achieving the object of the present invention. In this case, the program codes read out from the storage medium implement new functions of the present invention, and the storage medium which stores the program codes constitutes the present invention.

The program form is arbitrary such as an object code, a program executed by an interpreter, or script data supplied to an OS as long as a program function is attained.

The storage medium for supplying the program includes a flexible disk, hard disk, optical disk, magnetooptical disk, MO, CD-ROM, CD-R, CD-RW, magnetic tape, nonvolatile memory card, ROM, and DVD. In this case, the program codes read out from the storage medium implement the functions of the above-described embodiment, and the storage medium which stores the program codes constitutes the present invention.

As another program supply method, a client computer connects to an Internet homepage via the browser of the client computer. Then, the computer program of the present invention or a compressed file containing an automatic installing function is downloaded from the homepage to a recording medium such as a hard disk, thereby supplying the program. The program can also be implemented by grouping program codes which form the program of the present invention into a plurality of files, and downloading the files from different homepages. That is, claims of the present invention also incorporate a WWW server, FTP server, and the like which prompt a plurality of users to download the program files for implementing functional processes of the present invention by a computer.

The program of the present invention can be encrypted, stored in a storage medium such as a CD-ROM, and distributed to a user. A user who satisfies predetermined conditions is prompted to download decryption key information from a homepage via the Internet. The user executes the encrypted program using the key information, and installs the program in the computer.

The functions of the embodiment are implemented when the computer executes the readout program codes. Also, the functions of the embodiment are implemented when an OS (Operating System) or the like running on the computer performs some or all of actual processes on the basis of the instructions of the program codes.

The program codes read out from the storage medium may be written in the memory of a function expansion board inserted into the computer or the memory of a function expansion unit connected to the computer. After that, the CPU of the function expansion board or function expansion unit performs some or all of actual processes on the basis of the instructions of the program codes. These processes also implement the functions of the above-described embodiment.

An embodiment of the present invention can provide a printing system adapted to be able to selectively supply sheets of a job having undergone print processing by a printing apparatus to a plurality of sheet processing apparatuses, comprising: display control means for causing a display unit to display a device configuration window, the device configuration window associating information representing a configuration of the printing system with information indicating presence of a job being processed by the printing system; and control means for enabling an operator to select a job requiring specific processing by using the device configuration window.

In one example, the device configuration window associates the information representing the configuration with information indicating locations of sheets of the job being processed by the printing system.

In another example, the device configuration window associates graphical images representing the configuration with soft keys for selecting the job.

The soft keys may be displayed to be able to distinguish from other soft keys to select other jobs displayed by the device configuration window.

In one embodiment, said control means enables an operator by using user interface to input an instruction for requiring the specific processing before selecting the job by using the device configuration window.

The specific processing may include processing to perform check print for the job. The specific processing may include processing to suspend the job. The specific processing may include processing to display detailed information of the job. The specific processing may include processing to stop the job.

In one embodiment, said display control means displays the device configuration window that associates the configuration of the printing system with information on a job in process by the printing system, as a first display to select a job that has not been completely processed in the printing system, displays a list window of jobs that have not been completely processed, as a second display to select a job that has not been completely processed in the printing system, and allows designating a selection candidate job via one of the device configuration window and the list window.

Another embodiment of the present invention can provide a method of a printing system adapted to be able to selectively supply sheets of a job having undergone print processing by a printing apparatus to a plurality of sheet processing apparatuses, the method comprising the steps of: causing a display unit to display a device configuration window, the device configuration window associating information representing a configuration of the printing system with information indicating presence of a job being processed by the printing system; and enabling an operator to select a job requiring specific processing by using the device configuration window.

Another embodiment of the present invention can provide a program, which has been recorded on a computer-readable recording medium, for causing a computer to execute a printing system control method as set out in the preceding paragraph.

Another embodiment of the present invention can provide a printing system (1000) capable of processing a plurality of jobs concurrently, the system comprising: a printing apparatus (100) operable to perform printing on sheets of each such job; one or more sheet processing apparatuses (200a, 200b, 200c) arranged for receiving sheets printed on by the printing apparatus and operable to perform sheet processing operations on the received sheets; and selection control means operable to enable an operator of the system to first select a kind of processing to be applied to one of the jobs presently being processed by the system and to then select the job to which processing of the selected kind is to be applied.

The selection control means in this embodiment may be switchable between one selection mode in which the operator selects the job after selecting said kind of processing, and another selection mode in which the operator selects the job before selecting said kind of processing.

The present invention may be applied to a system including a plurality of devices or an apparatus formed by a single device. The present invention can also be achieved by supplying a program to the system or apparatus. In this case, the system or apparatus can obtain the effects of the present invention by providing, to the system or apparatus, a storage medium which stores a program represented by software for achieving the present invention.

The present invention is not limited to the above-described embodiment, and various modifications (including organic combinations of embodiments) can be made without departing from the gist of the invention, and are not excluded from the scope of the invention. For example, in the embodiment, the control unit 205 in the printing apparatus 100 serves as a main controller for various control operations. Instead, an external controller in a housing different from the printing apparatus 100 may also execute some or all of various control operations.

While the present invention has been described with reference to exemplary embodiments, it is to be understood that the invention is not limited to the disclosed exemplary embodiments. The scope of the following claims is to be accorded the broadest interpretation so as to encompass all such modifications and structures and functions lying within the scope.

## Claims

1. A printing system (1000) capable of processing a plurality of jobs concurrently, the system comprising:
a printing apparatus (100) operable to perform printing on sheets of each such job;
one or more sheet processing apparatuses (200a, 200b, 200c) arranged for receiving sheets printed on by the printing apparatus and operable to perform sheet processing operations on the received sheets;
a display unit (401),
**characterized by** comprising:
display control means (205) connected operatively with the display unit (401) configured to cause (S2109) the display unit to display a system configuration window (2502) including graphical images, representing a configuration of the printing system, associated with information indicating, for at least one job presently being processed without error by the printing system, where sheets of the job are present within the printing system; and
selection control means (205) operable, when said system configuration window is being displayed on the display unit, to enable (S2110) an operator of the system to select, via the displayed system configuration window, one of the presently-processed jobs using the displayed information wherein the selection control means is further operable to enable the operator to select a kind of processing to be applied to the selected job.

2. A printing system as claimed in claim 1, wherein said display control means is operable to cause the display unit to display the system configuration window (2502), indicating where sheets of the plurality of jobs are present within the system, for each job presently being processed by the printing system.

3. A printing system as claimed in claim 1 or 2, wherein the system configuration window includes display elements indicating locations within the printing system of sheets of the or each job presently being processed by the system.

4. A printing system as claimed in claim 3, wherein said graphical images representing a configuration of the printing system represent the physical arrangement of the system.

5. A printing system as claimed in claim 3 or 4, wherein in the system configuration window (2502) the display elements are arranged at positions corresponding to the physical locations of said sheets of the presently-processed jobs.

6. A printing system as claimed in claim 3, 4 or 5, wherein the display elements corresponding to different jobs have different appearances.

7. A printing system as claimed in claim 3, 4 or 5, wherein each display element provides text information identifying its corresponding job.

8. A printing system as claimed in any one of preceding claim, wherein the displayed information for at least one of the jobs is or includes a soft key which can be actuated by the operator to select the job corresponding to the displayed information concerned.

9. A printing system as claimed in claim 1, wherein the selection control means (205) is operable to enable the operator to select said kind of processing first (S2103) and then to select the job (S2110) which is to be subject to processing of the selected kind.

10. A printing system as claimed in claim 9, wherein the selection control means (205) is switchable between one selection mode in which the operator selects the job after selecting said kind of processing, and another selection mode in which the operator selects the job before selecting said kind of processing.

11. A printing system as claimed in any preceding claim, wherein the selection control means (205) is further operable to enable the operator to select one of the jobs in another manner (S2111-S2119) not involving said displayed information (2502).

12. A printing system as claimed in claim 11, wherein the selection control means (205) is operable to enable the operator to choose (S2107, S2108) whether to select the job using said displayed information or in said other manner.

13. A printing system as claimed in claim 9, wherein the kinds of processing applicable to a selected job include one or more of the following: performing a check print for the job (S2123-S2125); suspending the job (S2120); displaying detailed information about the job (S2121); and stopping the job (S2122).

14. A printing system as claimed in any preceding claim, comprising a plurality of such sheet processing apparatuses (200a, 200b, 200c) operable to perform different respective kinds of sheet processing operation.

15. A printing system as claimed in claim 14, wherein the sheet processing operations include one or more of the following: stacking sheets; glue binding sheets; and saddle stitching sheets.

16. A printing system as claimed in any preceding claim, wherein said display control means (205) and said selection control means (205) are included in the printing apparatus (100).

17. A printing system as claimed in any one of claims 1 to 16, wherein said display control means (205) and said selection control means (205) are included in a computer (103, 104) connected operatively to the printing apparatus (100) and said one or more sheet processing apparatuses (200).

18. A printing system as claimed in any preceding claim, wherein the display control means is further operable to cause the display unit to display a list (2501) of the plurality of jobs presently being processed, wherein the selection control means is further operable to enable an operator of the system to select one of the presently-processed jobs via the system configuration window or the list of the plurality of jobs presently being processed.

19. A method of controlling a printing system (1000), which is capable of processing a plurality of jobs concurrently and which comprises a printing apparatus (100) which performs printing on sheets of each such job and one or more sheet processing apparatuses (200a, 200b, 200c) which receive sheets printed on by the printing apparatus and perform sheet processing operations on the received sheets, the method comprising:
causing (S2109) a display unit of the printing system to display a system configuration window (2502) including graphical images representing a configuration of the printing system associated with information indicating, for at least one job presently being processed without error by the printing system, where sheets of the job are present within the printing system; and
enabling an operator to select a kind of processing to be applied to a selected job and when said system configuration window is being displayed on the display unit, enabling (S2110) the operator of the system to select, via the displayed system configuration window, one of the presently-processed jobs using the displayed information.

20. A computer program which, when run on a computer, causes the computer to carry out the method of claim 19.

## Patentansprüche

1. Drucksystem (1000), das in der Lage ist, zugleich mehrere Jobs zu verarbeiten, wobei das System umfasst:
eine Druckvorrichtung (100), betreibbar zum Durchführen eines Drucks auf Bögen eines jeden solchen Jobs;
eine oder mehrere Bogenbearbeitungsvorrichtungen (200a, 200b, 200c), ausgebildet zum Aufnehmen von durch die Druckvorrichtung bedruckten Bögen und betreibbar zum Durchführen von Bogenbearbeitungsvorgängen an den aufgenommenen Bögen;
eine Anzeigeeinheit (401),
**dadurch gekennzeichnet, dass** es umfasst:
operativ mit der Anzeigeeinheit (401) verbundene Anzeigesteuermittel (205), konfiguriert, um die Anzeigeeinheit zu veranlassen (S2109), ein Systemkonfigurationsfenster (2502) mit eine Konfiguration des Drucksystems darstellenden graphischen Bildern anzuzeigen, und zwar in Verbindung mit Information, welche für mindestens einen vom Drucksystem aktuell ohne Störung verarbeiteten Job angibt, wo innerhalb des Drucksystems sich Bögen des Jobs befinden; und
Auswahlsteuermittel (205), betreibbar, um bei Anzeige des Systemkonfigurationsfensters auf der Anzeigeinheit eine Bedienungsperson des Systems zu befähigen (S2110), über das angezeigte Systemkonfigurationsfenster unter Verwendung der angezeigten Information einen der aktuell verarbeiteten Jobs auszuwählen, wobei die Auswahlsteuermittel ferner betreibbar ist, um die Bedienungsperson zu befähigen, eine auf den ausgewählten Job anzuwendende Verarbeitungsart auszuwählen.

2. Drucksystem nach Anspruch 1, wobei die Anzeigesteuermittel betreibbar ist, um die Anzeigeeinheit zur Anzeige des Systemkonfigurationsfensters (2502) zu veranlassen, welches für jeden aktuell vom Drucksystem verarbeiteten Job angibt, wo sich Bögen der mehreren Jobs innerhalb des Systems befinden.

3. Drucksystem nach Anspruch 1 oder 2, wobei das Systemkonfigurationsfenster Anzeigeelemente enthält, welche Positionen innerhalb des Drucksystems von Bögen des oder jedes aktuell vom System verarbeiteten Jobs angeben.

4. Drucksystem nach Anspruch 3, wobei die eine Konfiguration des Drucksystems darstellenden graphischen Bilder die physische Anordnung des Systems darstellen.

5. Drucksystem nach Anspruch 3 oder 4, wobei die Anzeigeelemente im Systemkonfigurationsfenster (2502) an Stellen angeordnet sind, welche den physischen Positionen der Bögen der aktuell verarbeiteten Jobs entsprechen.

6. Drucksystem nach Anspruch 3, 4 oder 5, wobei die den unterschiedlichen Jobs entsprechenden Anzeigeelemente unterschiedlich aussehen.

7. Drucksystem nach Anspruch 3, 4 oder 5, wobei jedes Anzeigeelement Textinformation liefert, welche seinen entsprechenden Job identifiziert.

8. Drucksystem nach einem der vorhergehenden Ansprüche, wobei die angezeigte Information für mindestens einen der Jobs ein Softkey ist oder einen solchen enthält, welcher von der Bedienungsperson betätigt werden kann, um den der angezeigten Information entsprechenden betroffenen Job auszuwählen.

9. Drucksystem nach Anspruch 1, wobei die Auswahlsteuermittel (205) betreibbar ist, um die Bedienungsperson zu befähigen, zuerst die Verarbeitungsart (S2103) und danach den Job (S2110) auszuwählen, welcher der Verarbeitung der ausgewählten Art zu unterziehen ist.

10. Drucksystem nach Anspruch 9, wobei die Auswahlsteuermittel (205) umschaltbar ist zwischen einem Auswahlmodus, in dem die Bedienungsperson nach Auswahl der Verarbeitungsart den Job auswählt, und einem anderen Auswahlmodus, in welchem die Bedienungsperson den Job vor Auswahl der Verarbeitungsart auswählt.

11. Drucksystem nach einem der vorhergehenden Ansprüche, wobei die Auswahlsteuermittel (205) ferner betreibbar ist, um die Bedienungsperson zur Auswahl eines der Jobs auf eine andere Weise (S2111 - S2119) zu befähigen, die die angezeigte Information (2502) nicht einbezieht.

12. Drucksystem nach Anspruch 11, wobei die Auswahlsteuermittel (205) betreibbar ist, die Bedienungsperson zu befähigen, zu wählen (S2107, S2108), ob sie den Job unter Verwendung der angezeigten Information oder auf die andere Weise auswählt.

13. Drucksystem nach Anspruch 9, wobei die auf einen ausgewählten Job anwendbaren Verarbeitungsarten eine oder mehrere der Folgenden enthalten:
Durchführen eines Kontrolldrucks für den Job (S2123 - S2125); Aussetzen des Jobs (S2120); Anzeigen detaillierter Information über den Job (S2121); und
Anhalten des Jobs (S2122).

14. Drucksystem nach einem vorhergehenden Anspruch, umfassend mehrere solcher Bogenbearbeitungsvorrichtungen (200a, 200b, 200c), betreibbar zum Durchführen von jeweils unterschiedlichen Arten von Bogenbearbeitungsvorgängen.

15. Drucksystem nach Anspruch 14, wobei die Bogenbearbeitungsvorgänge einen oder mehrere der Folgenden enthalten: Stapeln von Bögen; Klebebinden von Bögen; und Rückenstichheften von Bögen.

16. Drucksystem nach einem vorhergehenden Anspruch, wobei die Anzeigesteuermittel (205) und die Auswahlsteuermittel (205) in der Druckvorrichtung (100) enthalten sind.

17. Drucksystem nach einem der Ansprüche 1 bis 16, wobei die Anzeigesteuermittel (205) und die Auswahlsteuermittel (205) in einem Computer (103, 104) enthalten sind, welcher operativ mit der Druckvorrichtung (100) und der einen oder den mehreren Bogenbearbeitungsvorrichtungen (200) verbunden ist.

18. Drucksystem nach einem vorhergehenden Anspruch, wobei die Anzeigesteuermittel ferner betreibbar ist, um die Anzeigeeinheit zu veranlassen, eine Liste (2501) der mehreren aktuell verarbeiteten Jobs anzuzeigen, wobei die Auswahlsteuermittel ferner betreibbar sind, um eine Bedienungsperson des Systems zu befähigen, einen der aktuell verarbeiteten Jobs über das Systemkonfigurationsfenster oder die Liste der mehreren aktuell verarbeiteten Jobs auszuwählen.

19. Verfahren zum Steuern eines Drucksystems (1000), das in der Lage ist, zugleich mehrere Jobs zu verarbeiten und eine Druckvorrichtung (100) umfasst, welche einen Druck auf Bögen von jedem solchen Job durchführt, sowie eine oder mehrere Bogenbearbeitungsvorrichtungen (200a, 200b, 200c) umfasst, welche durch die Druckvorrichtung bedruckte Bögen aufnehmen und Bogenbearbeitungsvorgänge an den aufgenommenen Bögen durchführen, wobei das Verfahren umfasst:
Veranlassen (S2109) einer Anzeigeeinheit des Drucksystems, ein Systemkonfigurationsfenster (2502) mit eine Konfiguration des Drucksystems darstellenden graphischen Bildern anzuzeigen, und zwar in Verbindung mit Information, welche für mindestens einen vom Drucksystem aktuell ohne Störung verarbeiteten Job angibt, wo innerhalb des Drucksystems sich Bögen des Jobs befinden; und
Befähigen einer Bedienungsperson, eine auf einen ausgewählten Job anzuwendende Verarbeitungsart auszuwählen und Befähigen (S2110) der Bedienungsperson des Systems, bei Anzeige des Systemkonfigurationsfenster auf der Anzeigeinheit über das angezeigte Systemkonfigurationsfenster unter Verwendung der angezeigten Information einen der aktuell verarbeiteten Jobs auszuwählen.

20. Computerprogramm, welches, wenn es auf einem Computer läuft, diesen veranlasst, das Verfahren nach Anspruch 19 auszuführen.

## Revendications

1. Système d'impression (1000) capable de traiter une pluralité de tâches simultanément, le système comprenant :
un appareil d'impression (100) pouvant fonctionner pour effectuer une impression sur des feuilles de chacune de ces tâches ;
un ou plusieurs appareils de traitement de feuilles (200a, 200b, 200c) agencés pour recevoir des feuilles imprimées par l'appareil d'impression et pouvant fonctionner pour effectuer des opérations de traitement de feuilles sur les feuilles reçues ;
une unité d'affichage (401),
**caractérisé en ce qu'**il comprend :
un moyen de commande d'affichage (205) relié de manière fonctionnelle à l'unité d'affichage (401) et configuré pour amener (S2109) l'unité d'affichage à afficher une fenêtre de configuration de système (2502) comportant des images graphiques, représentant une configuration du système d'impression, associées à des informations indiquant, pour au moins une tâche qui est actuellement traitée sans erreur par le système d'impression, où les feuilles de la tâche sont présentes dans le système d'impression ; et
un moyen de commande de sélection (205) pouvant fonctionner, lorsque ladite fenêtre de configuration de système s'affiche sur l'unité d'affichage, pour permettre (S2110) à un opérateur du système de sélectionner, via la fenêtre de configuration de système affichée, l'une des tâches actuellement traitées en utilisant les informations affichées où le moyen de commande de sélection peut en outre fonctionner pour permettre à l'opérateur de sélectionner un type de traitement à appliquer à la tâche sélectionnée.

2. Système d'impression tel que revendiqué dans la revendication 1, dans lequel ledit moyen de commande d'affichage peut fonctionner pour amener l'unité d'affichage à afficher la fenêtre de configuration de système (2502), indiquant l'emplacement des feuilles de la pluralité de tâches dans le système, pour chaque tâche qui est actuellement traitée par le système d'impression.

3. Système d'impression tel que revendiqué dans la revendication 1 ou 2, dans lequel la fenêtre de configuration de système comporte des éléments d'affichage indiquant les emplacements, dans le système d'impression, des feuilles de la tâche ou de chaque tâche qui est actuellement traitée par le système.

4. Système d'impression tel que revendiqué dans la revendication 3, dans lequel lesdites images graphique représentant une configuration du système d'impression représentant l'agencement physique du système.

5. Système d'impression tel que revendiqué dans la revendication 3 ou 4, dans lequel dans la fenêtre de configuration de système (2502) les éléments d'affichage sont agencés à des positions correspondant aux emplacements physiques desdites feuilles des tâches actuellement traitées.

6. Système d'impression tel que revendiqué dans la revendication 3, 4 ou 5, dans lequel les éléments d'affichage correspondant à différentes tâches ont des apparences différentes.

7. Système d'impression tel que revendiqué dans la revendication 3, 4 ou 5, dans lequel chaque élément d'affichage fournit des informations textuelles identifiant sa tâche correspondante.

8. Système d'impression tel que revendiqué dans l'une quelconque des revendications précédentes, dans lequel les informations affichées pour au moins l'une des tâches représentent ou comportent une touche programmable qui peut être actionnée par l'opérateur pour sélectionner la tâche correspondant aux informations affichées concernées.

9. Système d'impression tel que revendiqué dans la revendication 1, dans lequel le moyen de commande de sélection (205) peut fonctionner pour permettre à l'opérateur de sélectionner en premier ledit type de traitement (S2103) et ensuite de sélectionner la tâche (S2110) qui doit subir un traitement du type sélectionné.

10. Système d'impression tel que revendiqué dans la revendication 9, dans lequel le moyen de commande de sélection (205) peut être commuté entre un mode de sélection dans lequel l'opérateur sélectionne la tâche après la sélection dudit type de traitement, et un autre mode de sélection dans lequel l'opérateur sélectionne la tâche avant la sélection dudit type de traitement.

11. Système d'impression tel que revendiqué dans l'une des revendications précédentes, dans lequel le moyen de commande de sélection (205) peut en outre fonctionner pour permettre à l'opérateur de sélectionner l'une des tâches dans une autre manière (S2111-S2119) n'impliquant pas lesdites informations affichées (2502).

12. Système d'impression tel que revendiqué dans la revendication 11, dans lequel le moyen de commande de sélection (205) peut fonctionner pour permettre à l'opérateur de choisir (S2107, S2108) soit de sélectionner la tâche en utilisant lesdites informations affichées ou dans ladite autre manière.

13. Système d'impression tel que revendiqué dans la revendication 9, dans lequel les types de traitement applicables à une tâche sélectionnée comportent une ou plusieurs étapes parmi les étapes suivantes qui consistent : à effectuer une copie d'essai pour la tâche (S2123-S2125) ; à suspendre la tâche (S2120) ; à afficher des informations détaillées concernant la tâche (S2121) ; et à arrêter la tâche (S2122).

14. Système d'impression tel que revendiqué dans l'une des revendications précédentes, comprenant une pluralité de tels appareils de traitement de feuilles (200a, 200b, 200c) pouvant fonctionner pour effectuer différents types respectifs d'opération de traitement de feuilles.

15. Système d'impression tel que revendiqué dans la revendication 14, dans lequel les opérations de traitement de feuilles comportent une ou plusieurs étapes parmi les étapes suivantes qui consistent : à empiler des feuilles, à lier à la colle les feuilles ; et à piquer à cheval les feuilles.

16. Système d'impression tel que revendiqué dans l'une des revendications précédentes, dans lequel ledit moyen de commande d'affichage (205) et ledit moyen de commande de sélection (205) sont inclus dans l'appareil d'impression (100).

17. Système d'impression tel que revendiqué dans l'une quelconque des revendications 1 à 16, dans lequel ledit moyen de commande d'affichage (205) et ledit moyen de commande de sélection (205) sont inclus dans un ordinateur (103, 104) connecté de manière fonctionnelle à l'appareil d'impression (100) et auxdits un ou plusieurs appareils de traitement de feuilles (200).

18. Système d'impression tel que revendiqué dans l'une des revendications précédentes, dans lequel le moyen de commande d'affichage peut en outre fonctionner pour amener l'unité d'affichage à afficher une liste (2501) de la pluralité de tâches qui sont actuellement traitées, où le moyen de commande de sélection peut en outre fonctionner pour permettre à un opérateur du système de sélectionner l'une des tâches actuellement traitées via une fenêtre de configuration de système ou la liste de la pluralité de tâches qui sont actuellement traitées.

19. Procédé de commande d'un système d'impression (1000), qui est capable de traiter une pluralité de tâches simultanément et qui comprend un appareil d'impression (100) qui effectue une impression sur des feuilles de chacune des ces tâches et un ou plusieurs appareils de traitement de feuilles (200a, 200b, 200c) qui reçoivent des feuilles imprimées par l'appareil d'impression et effectuent des opérations de traitement de feuilles sur les feuilles reçues, le procédé comprenant le fait :
d'amener (S2109) une unité d'affichage du système d'impression à afficher une fenêtre de configuration de système (2502) comportant des images graphiques représentant une configuration du système d'impression associées à des informations indiquant, pour au moins une tâche qui est actuellement traitée sans erreur par le système d'impression, où les feuilles de la tâche sont présentes dans le système d'impression ; et
de permettre à un opérateur de sélectionner un type de traitement à appliquer à une tâche sélectionnée et lorsque ladite fenêtre de configuration de système s'affiche sur l'unité d'affichage, de permettre (S2110) à l'opérateur du système de sélectionner, via la fenêtre de configuration de système affichée, l'une des tâches actuellement traitées en utilisant les information affichées.

20. Programme informatique qui, lorsqu'il est exécuté sur un ordinateur, amène l'ordinateur à mettre en oeuvre le procédé de la revendication 19.
